# EUROPEAN PATENT SPECIFICATION

(11) **EP 0 871 010 B1**
(45) Date of publication and mention of the grant of the patent: **09.11.2005**
(21) Application number: 98106354.8
(22) Date of filing: 07.04.1998
(51) Int. Cl.: G01C 21/20

(54) **Vehicle navigation apparatus**
Fahrzeugnavigationsvorrichtung
Dispositif de navigation véhiculaire

(30) Priority: 08.04.1997 JP 10523697
(43) Date of publication of application: 14.10.1998
(73) Proprietor: AISIN AW CO., LTD., Anjo-shi, Aichi 444-1192 (JP)
(72) Inventor: Shinichi, Kato, Anjo-shi, Aichi-ken 444-1192 (JP); Katsuhiko, Mutsuga, Anjo-shi, Aichi-ken 444-1192 (JP)
(74) Representative: TBK-Patent

(56) References cited:
- US-A- 5 262 775
- PATENT ABSTRACTS OF JAPAN vol. 1996, no. 07, 31 July 1996 (1996-07-31) & JP 08 083399 A (NISSAN MOTOR CO LTD), 26 March 1996 (1996-03-26)
- SAITO T ET AL: "AUTOMOBILE NAVIGATION SYSTEM USING BEACON INFORMATION" PROCEEDINGS OF THE VEHICLE NAVIGATION AND INFORMATION SYSTEMS CONFERENCE. (VNIS),US,NEW YORK, IEEE, vol. CONF. 1, 1989, pages 139-145, XP000089879

## Description

The present invention relates to navigation apparatus for searching for movement routes of a ground moving object based on map information and for transmitting by information communications this movement route to a moving-object driver. In more particular, the invention relates to route search apparatus with improved scheme of searching for an optimum route leading to a destination location, and its associative navigation apparatus as well as a medium storing therein computer programs for navigation processing.

Recently, traffic information concerning respective roads or parking area information or the like undergo transmission and reception between road information stations, such as for example vehicle information communications system (VICS) or automobile traffic information system (ATIS), and navigation apparatus built in land vehicles as ground moving objects. More specifically, information as to roads and parking areas may be collected and governed by some information acquisition/collection centers, including the Metropolitan Police Office, Japanese Road Traffic Information Center, Parking Area Management Center, or the like. The collected information as to roads and the like is sent forth over the air from the VICS center by means of either radiation broadcasting--such as optical beacons, radio-wave beacons, or FM multiplexing (frequency modulation multiplex scheme)--or wireless telephones.

Transmitter devices for sending forth optical beacon or radiowave beacon are installed at constant intervals along respective roads above each road (in the air) or on the ground surface. On the other hand, when a land vehicle having a built-in receiver device (light-receiving device or the like) for optical beacon or radio beacon passes under or immediately above one of such transmitter devices, VICS data is received. Also, in the case of FM multiplex radiation, VICS data may be received by commercially available radio modules capable of receiving FM broadcast programs. Further, in the case of wireless telephones, VICS data may be available by use of general-purpose public telephone sets such as handheld telephones.

The VICS data as transmitted by light or radio beacons may contain therein information about road segments in a relatively narrow coverage near or around the beacon transmitter device. Alternatively, the VICS data sent forth by either FM multiplex or wireless telephones may involve information about roads in a relatively wide coverage. Additionally, in ATIS, information as collected by the information acquisition agency such as Japanese Road Traffic Information Center is transmitted via public telephone communication networks. In other words, unlike VICS, in ATIS, necessary road information is down-loaded by means of interactive communications. It is thus possible tc receive information items about roads or streets within a desired local area only.

On the other hand, in navigation apparatus receiving road information by VICS data, a change of a guidance route is selectively performed in accordance with the content of such road information. One example is that where it is identified from the received road information that a crowded street or under-the-construction road is included in part of a prior searched guidance route, another guidance route is newly searched which detours such crowded road. In other words, the guidance route may be changed or modified at any time when required to do so in accordance with the up-to-date road information, enabling achievement of more comfortable travel toward either a destination or temporary stop-and-stay location. Note here that the first searched guidance route is to be searched at a time point when a destination is set in the navigation apparatus or alternatively at an instant when the stop-and-stay location is set therein. In cases where no roads or streets with traffic difficulties, such as congested ones, are detected on the way of traveling along a guidance route, travel guidance is performed along such guidance route.

However, it can happen in some cases that execution of such guidance route change in accordance with road information received from the road information station, such as VICS or the like, would result in inconvenience or misconduct. By way of example, where a land vehicle is traveling near or around a road-crossing point or "intersection" at which the vehicle is expected to turn to the right or left along the prior searched guidance route, it might possibly occur that a re-search gets started to search for a guidance route in conformity with new version of the road information. In this case, since certain time might be required for execution of such re-search of a guidance route, it can happen in such event that no guidance routes are visible on a display screen of the navigation apparatus while simultaneously forcing audible information presentation to be interrupted. Further, if such guidance route change is suddenly done at a location near the intersection at which the vehicle is to change its travel direction, then this can require a rapid change of vehicle operations such as a lane change or the like, which would result in lack or deficiency of the capability of realizing good vehicle travel conditions in several cases.

Document "Automobile Navigation System using Beacon Information" by Takahuro Sahito et al., Proceedings of the Vehicle Navigation and Information Systems Conference, (VNIS), US, New York, IEEE, Vol. Conference 1, 1989, pages 139-145, discloses an automobile navigation system, in which traffic information is received from beacons. In detail, this document describes a route search apparatus and a navigation apparatus as described in the preambles of the independent claims 1, 3 and 4. According to this document, in case signals from beacons advise of congestion or closure of a segment in the planned road, an alternative route is calculated and displayed. This document also considers the time necessary for calculations and re-calculations of a new route. As a solution, this document suggests to develop faster route calculation algorithms.

To avoid the foregoing problems, the present invention makes it possible to provide selectivity of whether a detour route is searched for or not in a specific case where a road with traffic difficulty is found from received VICS data on the way of a guidance route leading to a once-set destination location. More specifically, a route change processing is to be executed only where there is enough time to complete a series of processings associated with a route re-search until when the vehicle arrives at a travel-direction change preparation start point along a route as presently guided.

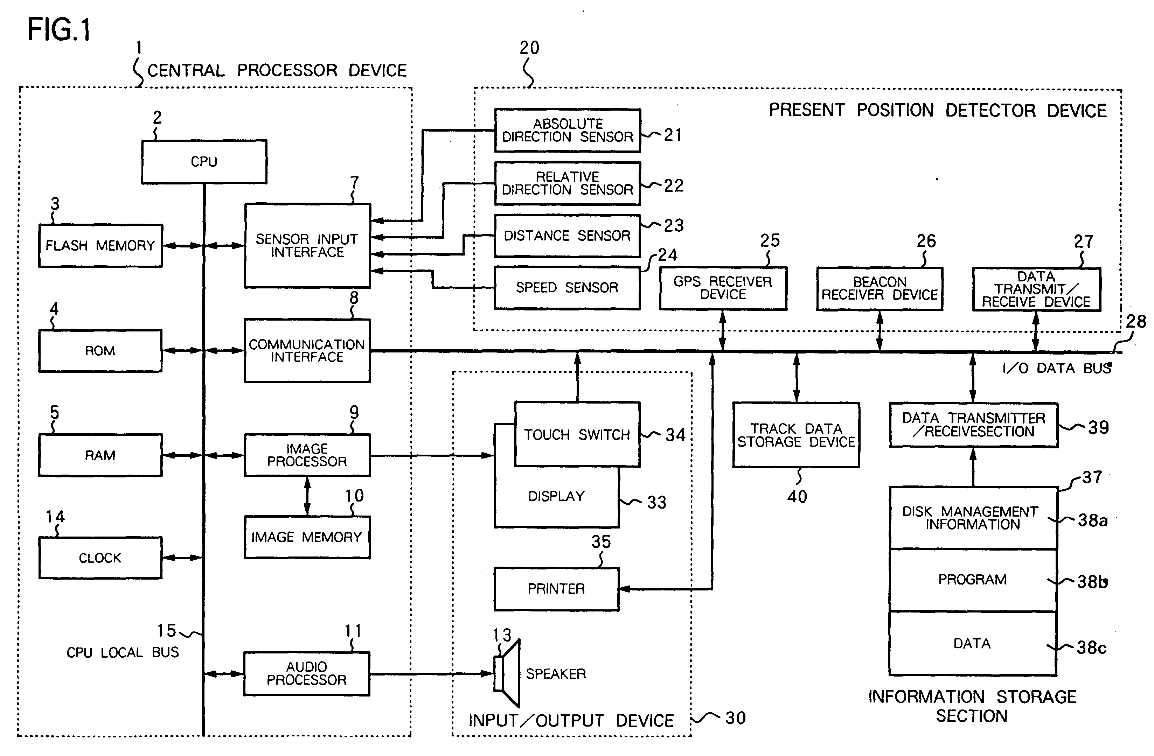

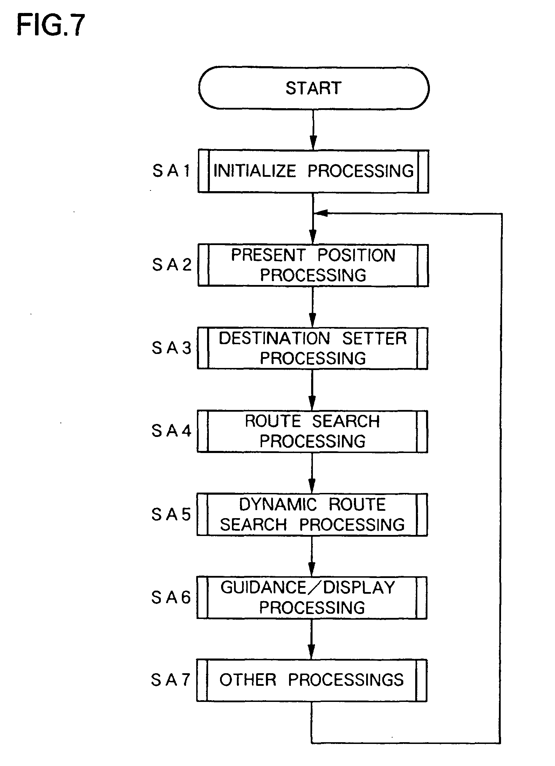

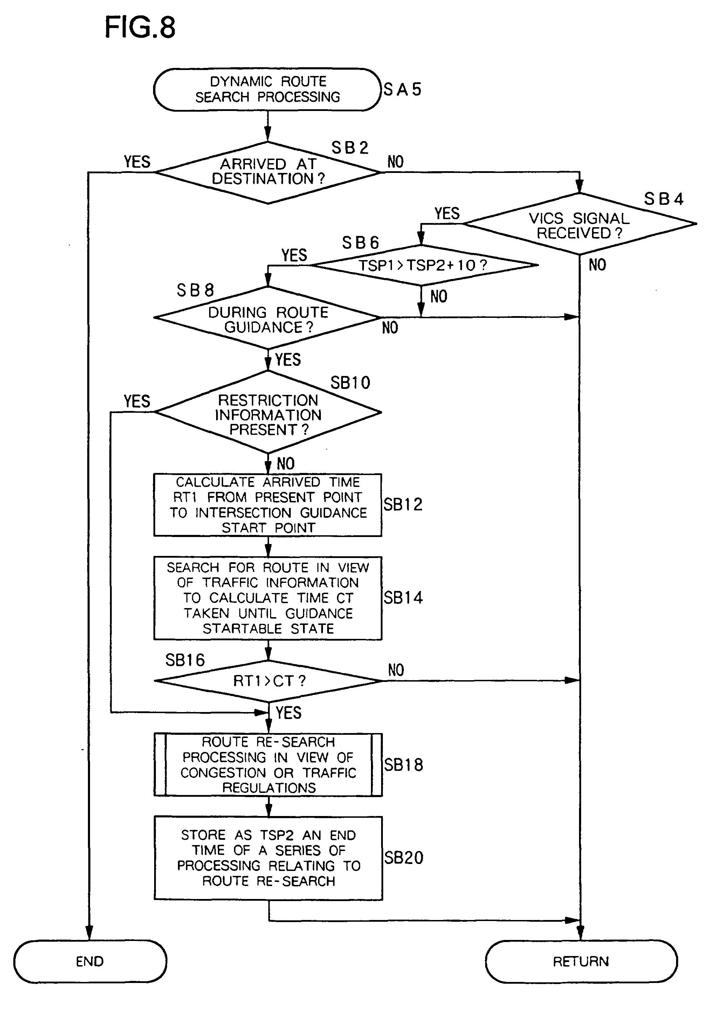

Navigation apparatus of the present invention as will be explained hereinafter comprises: present position detection means (an absolute direction sensor 21, relative direction sensor 22, distance sensor 23 or GPS receiver device 25 shown in Fig. 1) for detecting a present position of a moving object; road traffic information reception means (a beacon receiver device 26 or data transmitter/receiver device 27) for receiving road traffic information; route search means (step SA4 of Fig. 7) for searching for a route leading to a destination location; necessary time calculation means (step SB14 of Fig. 8) for calculating a certain time duration as required for a route search (step SA5 of Fig. 7) being performed in conformity with the road traffic information received by said road traffic information reception means and until guidance gets ready for initiation based on the route searched; and predictive time calculation means (step SB8 of Fig. 8) for calculating a predictive time as taken for the moving object to arrive at a specified nearby location before a branch section in the forward direction, wherein the apparatus is featured in that said route search means comprises comparison means (step SB16 of Fig. 8) for comparing said necessary time to said predictive time, and judgment means (step SB16 of Fig. 8) responsive to said comparison means for judging whether a route search is conducted.

The navigation apparatus of the present invention as will be explained later comprises: present position detection means (absolute direction sensor 21, relative direction sensor 22, distance sensor 23 or GPS receiver device 25 of Fig. 1) for detecting a present position of a moving object; road traffic information reception means (beacon receiver device 26 or data transmitter/receiver device 27) for receiving road traffic information; route search means (step SA4 of Fig. 7) for searching for a route leading to a destination; necessary time calculation means (step SB14 of Fig. 8) for calculating a necessary time required for a route search as performed in accordance with the road traffic information received by said road traffic information reception means and until availability of initiation of guidance using the resultant route; and predictive time calculation means for calculating a predictive time as taken for the moving object to reach a travel direction change location at which it is expected to turn in direction toward the route thus route-searched in accordance with said received road traffic information, featured in that said route search means comprises comparison means (step SB16 of Fig. 8) for comparing between said time duration and said predictive time, and judgment means (step SB16 of Fig. 8) for judging whether a route search is to be performed.

These and other objects, features and advantages of the invention will be apparent from the following more particular description of preferred embodiments of the invention, as illustrated in the accompanying drawings.
Fig. 1 is a circuit diagram of an overall configuration of a navigation apparatus.
Fig. 2 is a diagram showing a data structure as stored in data 38c of an information storage section 37.
Fig. 3 is a diagram showing data stored in a RAM 5.
Fig. 4 is a diagram showing a structure of a road data file F4.
Fig. 5 is a diagram showing a data structure of a link data file F17.
Fig. 6 is a diagram showing a relation of VICS link numbers VRB versus road numbers DR.
Fig. 7 is a diagram showing a flow chart of the entire processing.
Fig. 8 is a diagram showing a flow chart of a dynamic route search processing.
Fig. 9 is a diagram showing a flow chart of a guidance/display processing.
Fig. 10 is a diagram showing a manner of a display 33 prior to a route re-search based on VICS data.
Fig. 11 is a manner of the display 33 immediately before execution of a route re-search based on VICS data.
Fig. 12 is a diagram showing a manner of the display 33 while the route re-search is being performed based on VICS data.
Fig. 13 is a diagram showing a manner in which a new route and an old route as searched based on VICS data are displayed in parallel on the display 33.

### Overall Circuitry

Fig. 1 shows an entire circuit configuration of navigation apparatus including the navigation apparatus in accordance with the present invention. A central processor device 1 controls operations of the entire navigation apparatus. This central processor device 1 is constituted from a central processing unit (CPU) 2, flash memory 3, read-only memory (ROM) 4, random access memory (RAM) 5, sensor input interface 7, communication interface 8, image processor 9, image memory 10, audio processor 11, and clock generator 14. Respective elements of the CPU 2 through clock generator 14 are mutually connected by a CPU local bus 15. Under control of the CPU 2, various kinds of information data may be transmitted and received among respective devices such as the flash memory 3 and the like.

The flash memory 3 is comprised of an electrically erasable and writable read-only memory (EEPROM) or equivalents thereto. Written and stored (installed/transferred) in this flash memory 3 (internal storage medium/means) is a computer program 38b as recorded in an information storage section 37 (external storage medium/means) such as optical discs or magneto-optical disks. Additionally, the flash memory 3 is capable of storing therein a program 38b as transferred thereto from an external device, such as a main information processing device or the like, via a data transmit/receive device 27.

In short, the flash memory 3 is designed to store therein the externally prestored program(s) as transferred thereto. Accordingly, upon alternation of the program stored in the flash memory 3, a processing is executable by a new routine. This program 38b is the program that follows each flow chart as will be described later, and may also be a variety of kinds of programs to be executed at the CPU 2. For example, this program 38b is display control of information and audible guidance control.

This installation (transfer/duplicate copy) is automatically performed when an information storage section 37 is set in the subject navigation apparatus, or when the subject navigation apparatus is activated by turning on its power. Alternatively, the same may be installed by manual operations of operators. Additionally, the information storage section 37 stores therein disk management information 38a which contains labels or file identifiers or the like, permitting judgment of updated versions of the programs of the information storage section 37 by use of this disk management information 38a. This information storage section 37 is also capable of being replaced with any one of other information storage sections 37. It is thus possible to judge, based on the information content of the disk management information 38a, whether or not a new information storage section 37 is set.

By way of example, since the flash memory 3 stores therein a program and associative management information concerning this program, the management information of flash memory 3 is compared to the disk management information 38a every time when a new information storage section 37 is set. Where it is judged that an information storage section 37 containing a new program was set, the program of such information storage section 37 is then installed into flash memory 3. This may ensure that flash memory 3 always retains the up-to-date version of the program and data associated therewith. As a result of this, replacing one with another among information storage sections 37 may provide advanced navigation apparatus with updated functions.

The information stored in the flash memory 3 also contains several kinds of parameters for use in navigation operations. The ROM 4 stores therein displayable graphics data and various kinds of general-purpose data. The displayable graphics data may be respective data items as required for displaying route guidance and map images on a display 33. The various kinds of data items may be respective data used for navigation, such as audio waveform data which records electronic synthesized or human native voice for guidance voice.

The RAM 5 is for storing externally input data, various kinds of parameters used for calculations, calculation results, and one or more navigation programs. In other words, RAM 5 may be used also as a cache memory and working memory and the like. The clock generator 14 is comprised of a counter, a battery backup RAM or EEPROM, and the like. This clock generator 14 outputs time information.

The sensor input interface 7 is constructed from an analog-to-digital (A/D) converter circuit or buffer circuit or the like. Connected to this sensor input interface 7 is each sensor in a present position detector device 20. Sensor data of an analog signal or digital signal is input to the sensor input interface 7 from each sensor of present position detector device 20. This present position detector device 20 may include an absolute direction sensor 21, relative direction sensor 22, distance sensor 23, vehicle speed sensor 24, and the like.

The absolute direction sensor 21 may be a geomagnetic sensor for detecting the earth magnetism, for example. This absolute direction sensor 21 outputs data indicative of the South and North directions which may act as the absolute directions. The relative direction sensor 22 may for example be a steering angle sensor that makes use of a gyro device such as an optical fiber gyro, piezoelectric vibration gyro, or the like. This steering angle sensor is operable to detect the steering angle of a vehicle wheel. Relative direction sensor 22 outputs a relative angle in the travel direction of a "self" vehicle with the navigation apparatus built therein, relative to the absolute direction detected by absolute direction sensor 21.

The distance sensor 23 is comprised of a counter or the like that is operatively associated with a travel distance meter. This distance sensor 24 outputs data representative of a travel direction of the self vehicle. Distance sensor 24 is formed of a counter connected to a speed meter, or the like. This speed meter 24 outputs data proportional to the traveling speed of the vehicle.

An I/O data bus 28 is interconnected to a communication interface 8 of the central processor section 1. Connected in turn to this I/O data bus 28 are a GPS receiver device 25, beacon receiver device 26, data transmit/receive device 27 and the like in the present position detector device 20. Further connected to this I/O data bus 28 are a touch switch 34, printer 35 included in an input/output device 30, and data transmit/receive section 39 for reading data out of the information storage section 37. In summary, communication interface 8 permits transmission and reception of various kinds of data items between respective attached devices and the CPU local bus 15.

The present position detector device 20 operates to output data for use in detecting a present position or location of the self vehicle as mentioned previously. In short, the absolute direction is detected at the absolute direction sensor 21. Relative direction sensor 22 detects a relative azimuth angle with respect to this absolute direction. Further, a travel distance is detected at distance sensor 23. A travel speed of the self vehicle is detected at speed sensor 24. On the other hand, the GPS receiver device 25 receives signals (microwaves from a plurality of satellites each orbiting the Earth) of the global positioning system (GPS) for detection of geographic position data such as the latitude and longitude of self vehicle.

Also, the beacon receiver device 26 receives beacon waves as transmitted by a road information station such as the vehicle information communications system (VICS) or the like. Beacon receiver device 26 outputs to the I/O data bus 28 either information (VICS data) as to nearby roads or correction data of GPS. Additionally, while the beacon wave may be radio-wave beacon, light beacon or the like, the beacon wave as used in VICS is received within a relatively limited area. Accordingly, VICS data reception is effectuated only when the self vehicle with the navigation apparatus of this invention mounted therein passes through a location near one of information transmitter devices (transmission antenna, etc.) that send forth such beacon wave.

It should be noted that the information transmitter devices are installed, with constant intervals defined therebetween, at locations near road facilities such as road-crossing points or "intersections" along major roads (above a road or on the road surface). The VICS data transmitted as beacon waves from respective information transmitter devices may involve data indicative of a traffic condition of each road near a corresponding one of the information transmitter devices--e.g. within an area of 10-km radius with such information transmitter device being as its center. This data indicative of traffic condition may also involve general information items including, but not limited to, the degree of traffic congestion definable from traffic jam, crowd, impassability and traffic amount as well as traffic regulation information such as impassability due to construction works for road maintenance. Any road with such traffic regulation information attached thereto is the road inadequate for vehicle traveling. Additionally, each information transmitter device is under control of the road information station such as VICS.

For the data transmit/receive device 27, an FM multiplex radio-wave receiver, cellular phone or telephone communication link, or the like, may be used. In ATIS (automobile traffic information service) bidirectional or interactive communications are attainable via telephone links or the like. Where information is received by the FM multiplex radiowave receiver from the VICS center, only reception is available. In the case of interactive communications with the ATIS or VICS center via telephone networks, it is possible to select a local area for acquisition of road traffic information or information about parking facilities and the like. For instance, it is possible to receive certain information as to only the road condition near a destination, or alternatively, traffic information as to traffic congestion on respective roads in an expanded area covering from the start location to the destination. Such information may be used as auxiliary travel information. It is to be noted that with regard to these beacon receiver device 26 and data transmit/receive device 27, either one or both of them may be provided depending upon practical applications. This data transmit/receive device 27 may alternatively be one of other wireless communications tools including but not limited to commercially available radio receivers, television receivers, handheld telephones, and pagers.

The input/output device 30 is configured from a display 33, touch switch 34, printer 35, and speaker 13. The display 33 is for visually indicating thereon route guidance information during navigation operations. The touch switch 34 is attached onto the screen of display 33 in a way such that a plurality of transparent touch switches are disposed thereon in a planar matrix fashion. These transparent touch switches may be comprised of either contact switches made up of transparent electrodes or piezoelectric switches, by way of example. Selectively inputted from this touch switch 34 to the navigation apparatus is information necessary for setting a start location, destination, pass-through locations, and the like.

At the printer 35 a variety of kinds of information segments are printed as hard copies including but not limited to maps and facility guides as output through the communication interface 8. Each information item is transferred to the user from the speaker 13. Additionally, printer 35 may be eliminated if needed.

As the display 33, those image information displayable devices may be employed, including CRTs, liquid crystal displays, plasma displays, and the like. However, it is preferable to use as the display 33 a liquid crystal display, which is high in visibility and less in weight and power dissipation. Optionally employable as this display 33 is a wide-screen liquid crystal display of increased screen region, or alternatively, a parallel combination of two or more separatable liquid crystal display panels. It may be arranged to display independent information items on respective liquid crystal displays or to display continuous map information expanding between such plural liquid crystal display panels.

An image memory 10, such as a dynamic RAM (DRAM), dual-port DRAM or the like, is connected to the image processor 9 which is in turn coupled to the display 33. Image processor 9 performs controlling of writing image data into image memory 10. Further, data is read out of image memory 10 for visual indication of an image(s) on display 33 under control of image processor 9.

In addition, the image processor 9 is responsive to receipt of a graphics drawing command from CPU 2, for converting map data and character data into display image data which is then written into image memory 10. At this time, for screen scrolling, images around a display image are also formed for visual indication on display 33 for purposes of screen scrolling, and are simultaneously written into image memory 10.

An audio processor 11 is connected to the speaker 13. This audio processor 11 is connected via the CPU local bus 15 to the CPU 2 and ROM 4. CPU 2 allows audio waveform data for use in presenting guidance voice as read from ROM 4 to be input to audio processor 11. This audio waveform data is then converted by audio processor 11 into a corresponding analog signal and is then output from speaker 13. This audio processor 11 and the image processor 9 may alternatively be constituted from a general-purpose digital signal processor (DSP) or the like.

An information storage section 37 is connected via data transmit/receive section 39 to I/O data bus 28. This information storage section 37 stores therein disk management information 38a, program 38b for controlling the above-mentioned respective navigation operations, and data 38c such as map information. Disk management information 38a involves specific information concerning the data and program(s) as stored in this information storage section 37. One example is version information of the program 38b, or the like. Data 38c may nonvolatilely contain data necessary for the navigation operations, such as road map data and the like. This information storage section 37 is connected to data transmit/receive section 39 for performing data-read control between it and I/O data bus 28.

The information storage section 37 of this invention should not exclusively be limited to optical memories such as compact disc read-only memories (CD-ROMs) or the like, and may also be other devices which follow: any one of semiconductor memories such as IC memories, IC memory cards, and recording media including magnetic memories such as magnetooptical (MO) disks, fixed or hard disks, floppy disks, or the like. Additionally, when the recording medium of information storage section 37 is changed, the data transmit/receive section 39 is equipped with a data pickup adequate for such recording media changed. One example is that if the recording medium is a hard disk then the data transmit/receive section 39 is provided with a magnetic signal read/write device, such as a core head or equivalents thereto.

The data 38c of information storage section 37 may contain therein certain data required for intended navigation operations, such as map data, intersection data, node data, road/street data, photograph data, destination point data, guidance point data, detailed destination data, destination read data, house-shape data, and others. An appropriate navigation operation is effectuated using the road map data of the data 38c in a way as determined by the program 38b being stored in the information storage section 37. Additionally, this navigation program is read by data transmit/receive section 39 from information storage section 37 and is then written into flash memory 3. Other data may be visual guidance data, audible guidance data, schematic guidance route image data, etc.

Further included as the data of data 38c is a link data file F17 which represents the one-to-one correspondence relationship of road numbers of respective roads on maps, which road numbers may correspond to link numbers sent from the road information station associated therewith.

Additionally, the data 38c of information storage section 37 may also contain either map data items of different reduction scale rates or map data at a single rate of reduction scale. In other words, data 38c may involve either maps of the same area but different from each other in reduction scale rate or only map data of a single reduction scale rate. Where the map data of a single reduction scale rate is recorded, its reduction scale rate has been determined to ensure that detailed information is displayable when a map is displayed on display 33 at its maximal magnification rate.

In cases where only a single map data item is recorded in data 38c, when displaying a map less in reduction scale on display 33, i.e. a map representing a wide geographical area (wide-area map), information is rendered coarse or "thinned out" from the map data recorded in this data 38c. During such thin-out displaying of the map data of this data 38c, display symbol information of facilities or the like may be omitted in addition to effectuation of a processing of reducing the geographical distances between adjacent ones of respective roads and the like. Summarily, a "thin-out" treatment is performed to give higher priority to displaying of large facilities or major facilities, while preventing the others from being displayed.

### Data 38c of Information Storage 37

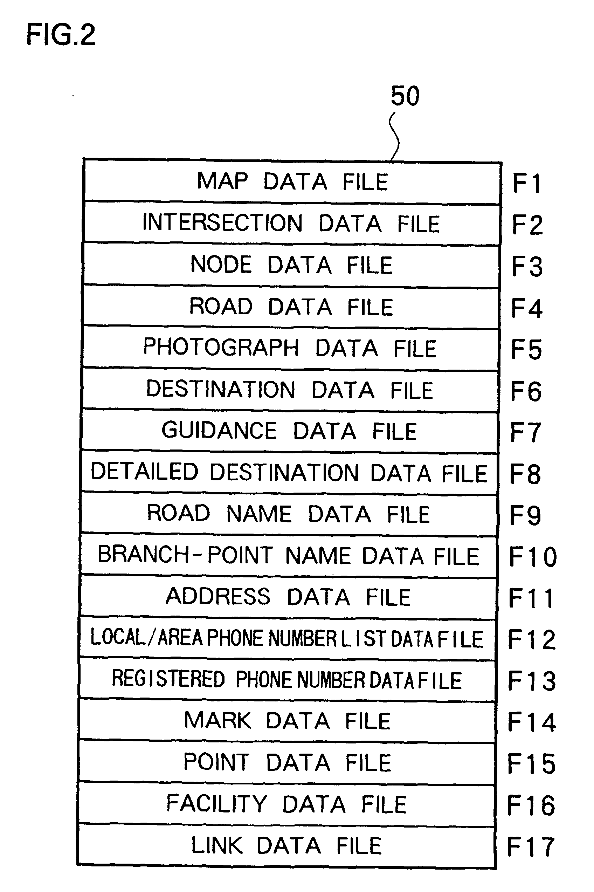

Fig. 2 shows the contents of respective data files as stored in the data 38c of information storage section 37. A map data file F1 stores therein map data including a national road map, local road maps, house area maps, or the like. The road map essentially consists of respective roads such as main trunk roads, highways, narrow streets or the like as well as land target objects (facilities or the like). The house-area map is a city map with graphics patterns indicative of the contour or shape of building structures or the like and road names being displayed thereon. The narrow streets are those roads that remain out of use in a route search processing as will be described infra. One example of such narrow streets is a narrow path which has its width less than a predefined value and yet is one of city roads and private roads other than national roads or prefectural roads. To make long story short, certain roads difficult for ordinary vehicles to travel simultaneously in opposite directions are regarded as the narrow streets.

An intersection data file F2 stores data concerning road intersections, such as geographical location coordinates and names thereof. A node data file F3 includes respective nodes' geographical coordinates data for use in performing a route search on maps. A road data file F4 stores data concerning roads, such as road locations, kinds and lane numbers as well as coupling relations among roads concerned. A photograph data file F5 involves image data of photographs of several places under request for visual indication, such as some kinds of facilities, sightseeing spots, major intersections, and the like.

A destination data file F6 contains data of locations and names of places, facilities and the like which will possibly be selected as a destination, such as some principal places and buildings, or alternatively enterprises and offices as listed in printed telephone directories. A guidance point data file F7 includes the contents of guidance indicator plates installed along roads and guidance data of certain locations with the necessity of issuing guidance such as intersection guidance and the like. A detailed destination data file F8 stores therein detailed data as to the destinations stored in the destination data file F6. A road name data file F9 involves road-name/title data of major ones of the roads stored in the road data file F4. A branch-point name data file F10 stores the name data of major branch points. An address data file F11 stores list data for use in searching for one desired destination based on its address from among those stored in the destination data file F6.

A local/area phone number list data file F12 stores therein list data of only the out-of-town/within-the-town or local/area telephone numbers of destinations stored in the destination data file F6. A registered phone number file data F13 stores some to-be-remembered phone numbers as has been registered by manual operations of the operator, which numbers include those of specific clients on business and the like. A mark data file F14 stores data of the positions and names of landmarks on the traveling route and also of some to-be-remembered places and the like, which have been input by manual operations of the operator. A point data file F15 stores detailed data of marking points stored in the mark data file F14. A facility data file F16 stores data of the positions and explanations of some target objects including want-to-stop-and-stay places other than a presently selected destination, which objects may be gas stations, convenience stores, parking areas or the like.

A link data file F17 stores therein data indicating which one of the roads in the road data file F4 corresponds to a link number included in VICS information as sent from the road information station or the like.

### Content of RAM 5

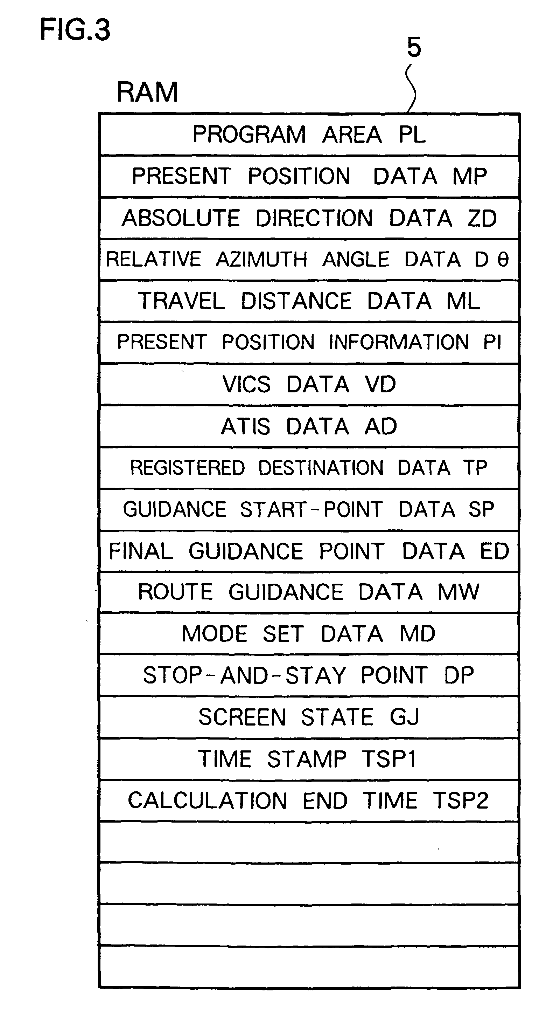

Fig. 3 shows part of data group stored in the RAM 5. Present position data MP is the data that represents a present position or location of the self vehicle as detected by the present position detector device 20. Absolute direction angle data ZD is the one indicative cf the South and North directions, which may be obtainable based on the information from absolute direction sensor 21. Relative azimuth angle data Dθ is the data indicating an angle of the traveling direction of the self vehicle with respect to the absolute direction angle data ZD. This relative azimuth angle data Dθ is obtainable based on the information from the relative direction sensor 22.

Travel distance data ML indicates the distance the vehicle has been traveled, which may be obtained based on data from the distance sensor 23. Present position information PI is the data concerning a present vehicle position, and is input from either the beacon receiver device 26 or data transmit/receive device 27. VICS data VD and ATIS data AD are those as input from either the beacon receiver device 26 or data transmit/receive device 27. VICS data VD or ATIS data AD is used to identify local traffic restriction, traffic congestion condition, or facility crowd condition such as of parking areas, for execution of certain processings as will be discussed later. This VICS data VD may also be used in some cases to effectuate error correction of a present vehicle position as detected at the GPS receiver device 25.

Registered destination data TP is the data that relates to an operator's registered destination with a coordinate position and name being adhered thereto. Guidance start-point data SP stores therein map coordinate data of a location at which the navigation operation is get started. Likewise, final guidance point data ED stores map coordinate data of a point whereat the navigation operation ends.

Note that for the guidance start-point data SP, the coordinates of a node along a guidance road may be used which node is nearest from either a present vehicle position or start location. The reason why this guidance start-point data SP is stored is that a vehicle present location according to the present position data MP can be within sites, such as golf links or parking areas, and thus will not always lie on the guidance road per se. Similarly, the guidance final-point data ED is such that the coordinates of a node along a guidance road nearest to the registered destination data TP is stored. The reason why this guidance final-point data ED is stored is that the coordinates of such registered destination data TP can be out of the guidance road.

Route guidance data MW stored in the RAM 5 is the data indicative of an optimal route or recommendable route leading to the destination, which may be obtainable by a route search processing at a later-described step SA4 or by re-search processing. Note here that respective roads on road maps stored in the data 38c of information storage section 37 have their inherent road numbers added thereto. The guidance route data MW may be constituted from a queue of road numbers covering from the guidance start-point data SP to final guidance point data ED.

Mode set data MD is the data for use in destination setting processing as will be later described. This mode set data MD is settable by the touch switch 34 as lamination-stacked on the display 33. This mode set data MD is used to specify a mode content as displayed on the screen of display 33. Stop-and-stay point data DP is information about facilities at which the vehicle is expected to stop and temporarily stay here on the way to the destination along a guidance route.

A screen state GJ is the data that indicates the status of visual presentation of the display 33. In other words, the display screen of display 33 is subdivided by a processing of program to be later described. The data of screen state GJ indicates which state this screen of display 33 lies in--that is, division state or single-display state. Hence, the data of screen state GJ will be rewritten or reprogrammed every time when the display status of display 33 is switched between the two modes.

A time stamp TSP1 indicates the issuance time point of up-to-date version of VICS data VD received. Specifically, VICS data VD contains therein information of respective roads monitored by the road information station. But, the road condition will change at every instant. Thus, the VICS data as issued by the road information station may include time-point information indicative of which such road information was issued to show a present road situation in the format of absolute time. This time information is stored in RAM 5 as the time stamp TSP1. RAM 5's calculation end time TSP2 is the data which represents a time point when both a later-described route re-search processing in accordance with the information, such as traffic jam or restriction, and a processing relating to such route re-search processing are completed in the navigation apparatus embodying the invention.

### Road Data

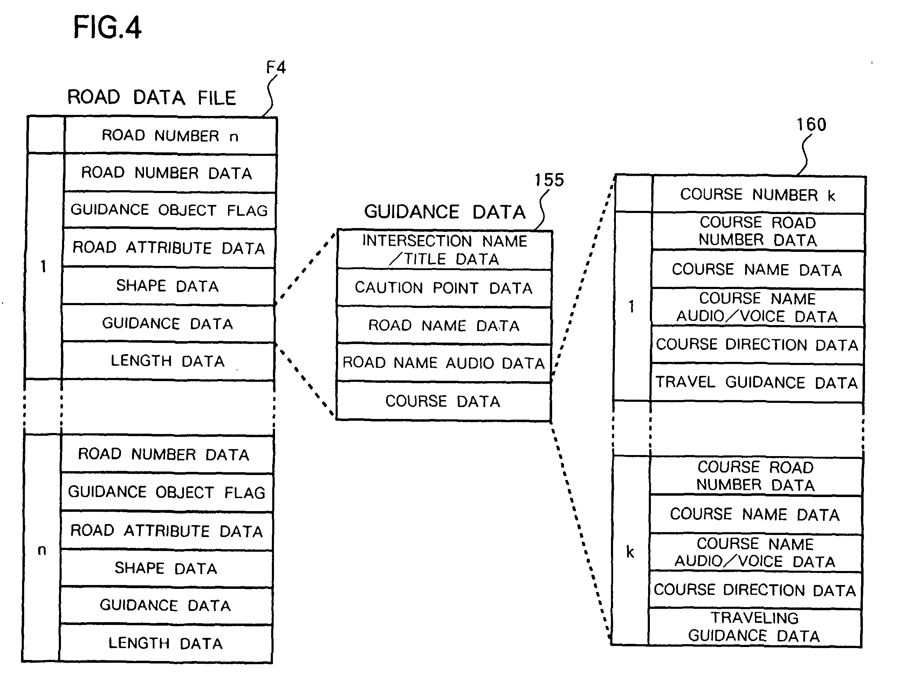

Fig. 4 shows part of the road data in the road data file F4 as stored in the information storage section 37. This road data file F4 contains therein information concerning those roads which are greater in width than a predefined value and are placed within an area stored in the map data file. Representing as "n" the number of roads included in this road data file F4, road data items concerning n roads are contained therein. Each road data may consist of a road number data, guidance object flag, road attribute data, shape data, guidance data, and length data.

A respective national road or the like contained in the map data of information storage section 37 is subdivided into minimal portions or "units." An identification number adhered to every road thus divided is the road number data. The guidance object flag of road data file F4 stores a value "1" if it is the guidance object road or alternatively "0" if non-guidance object roads. Note that the guidance object roads are those roads which are wider than a predefined width--e.g. 5.5 meters or greater in width--such as trunk roads, general roads and the like other than prefectural roads, and which are to be regarded as the roads to be subjected to a route search. The non-guidance object roads are those streets which are narrower than the predefined width--e.g. less than 5.5 meters--such as footpaths, alleys, and the like and which will not be subject to any route search. Optionally, the guidance object roads may be set as certain trunk roads high in lank than prefectural roads, while the non-guidance object roads may be set as the remaining trunk roads low in lank than the prefectural roads.

The road attribute data is the data indicating the road attributes, such as elevated tracks, subway roads, highways, toll roads, and the like. The shape data is the data indicative of the shape of each road. For example, the shape data is configured from coordinate data items of the start and end points of a road and coordinate data of each node which lies between the start and end points.

The guidance data may consist of intersection name/title data, caution point data, road name data, road name audio data, and course data. The intersection name data is the data which represents, when the road end point is an intersection, the name or title of such intersection. The caution point data is the data concerning certain caution points on roads, such as railroad crossings, tunnel entrances, tunnel exits, lane width-reduced points, etc. The road name audio data is the data representative of road names usable during audible presentation of route guidance.

The course data is the data regarding a road (this is regarded as the course) coupled to the road end point, which may consist of a course number k and data of every course. The data concerning such course may be constituted from course road number data, course name data, course name audio/voice data, course direction data, and travel guidance data.

The course road number is indicated by the course road number data. The title or name of a course road is indicated by the course name data. The course name audio data stores therein audio data for use in presenting audible or voice guidance of this course name. The course direction data shows the direction to which a course road is directed. The travel guidance data is the guidance data for use in issuing guidance that suggests to change a presently running road lane to the right side one, change to the left lane, or keep running on the center lane in order to enter a desired course road. The length data is the data indicative of the length between road start and end points, length spanning from the start point to each node, and length between adjacent ones of nodes.

### VICS Data VD

A data structure of VICS data VD as received via the beacon receiver device 26 will now be explained. One VICS data VD may consist of a degree of traffic congestion GD, congestion start position GST, congestion length GL, traffic restriction information GK, travel time RT and the like. These data items are added to one road as represented by each VICS link number VRB, respectively. The VICS link number as used herein may refer to a number as defined in the road information station that transmits the VICS information, which number is the number for identification of one road from the remaining ones under information-management of the road information station.

Accordingly, the VICS link number will not always coincide with the exact road number of the road data file F4 as stored in the information storage section 37. The correspondence relation of the road number of the road data file F4 versus VICS link number may be given by the link data file F17. This link data file F17 will be described in detail later in the description. Note here that it is also possible to put the road numbers of road data file F4 and the VICS link numbers VRB in a one-to-one correspondence relationship. If this is the case, the link data file F17 will no longer be required.

The congestion degree GD is the data indicative of the degree of traffic congestion of a road as designated by its VICS link number. Accordingly, when the congestion degree GD is relatively high in numerical level, this tells that such road of interest is in traffic jam rendering difficult for the vehicle to pass through it. Alternatively, this congestion degree GD may be the one which simply represents the degree of--such as in a way that employs some levels of pass-through elimination, traffic jam, crowd, much traffic amount, normal condition and the like, by way of example. The congestion start position GST is the data representative of a start or "head" point of traffic congestion with respect to a road as designated by the VICS link number thereof. Note here that this congestion start position GST may be a relative geographical distance from the start point of a road as designated by VICS link number VRB, or alternatively may be of real geographic coordinates. The congestion length GL is the data originated from a measurement of a queue of land vehicles included in such congestion on the basis of a geographical distance.

The restriction information GK is the data which represents traffic restriction content of a road as designated by its VICS link number. One example is that restriction information GK indicates that a road of interest is under construction, events, or closure. The travel time RT defines a time as taken for a vehicle to pass through the entire part of a road as designated by such VICS link number at expected speeds (for example, legally limited speeds).

It should be noted that since real roads include up lanes and down lanes, the VICS link numbers are also associated with independent numbers adhered to such up and down lanes. Information transmitter devices installed on roads, such as radiowave beacons, optical beacons and the like, are operable to transmit VICS data VD consisting of the congestion degree GD through travel time RT, with respect to each of roads experiencing traffic jam, congestion, or the like.

On the other hand, in the subject navigation apparatus, when a "self" vehicle with this apparatus built therein passes immediately beneath or above one of the information transmitter devices, its corresponding VICS data VD is received and then stored in RAM 5. Upon receipt of this VICS data VD, an issuance time point thereof is also stored in RAM 5 as a time stamp TSP1. Incidentally, the traffic congestion state of each road can vary with time. Further, the VICS data is received every time when the self vehicle pass through just beneath one information transmitter device. Accordingly, it will possibly happen that depending upon such issuance time point, the VICS data presently received is kept unchanged from the prior received VICS data VD in substantive content thereof. In view of this, the time stamp TSP1 is constantly monitored in order to eliminate recurrent execution of route search processings based on such updated VICS data less in change.

### Link Data File F17

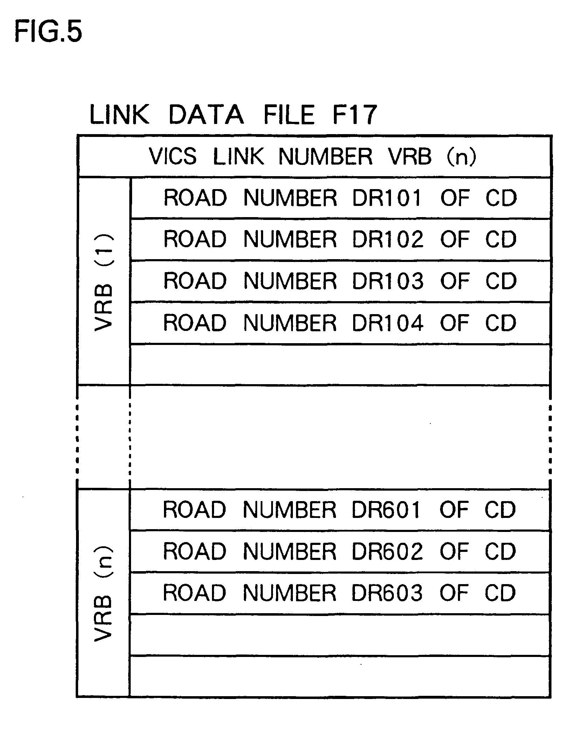

Fig. 5 is a diagram showing a configuration of the link data file F17 as recorded in the information storage section 37. As described previously, the VICS link numbers of VICS data VD are different from the road numbers of the road data file F4 recorded in information storage section 37. Hence, in order to identify which road number of the road data file F4 corresponds to the link number VRB of VICS data VD as presently received, the link data file F17 is recorded as a collate-check list (table) in information storage section 37.

It must be noted that a road designated by a single VICS link number VRB is not in one-to-one correspondence with a road recorded in the formation storage section 37. In other words, a road designated by such VICS link number VRB can correspond to roads designated by a plurality of road numbers in information storage section 37.

For example, in Fig. 5, a road designated by VICS link number VRB(1) corresponds to those roads as designated by road numbers DR101, DR102, DR103, DR104 in the road data file F4 of information storage section 37. Likewise, a VICS's road designated by VICS link number VRB(n) may correspond to those designated by road numbers DR601, DR602, DR603, in the road data file F4 of information storage section 37.

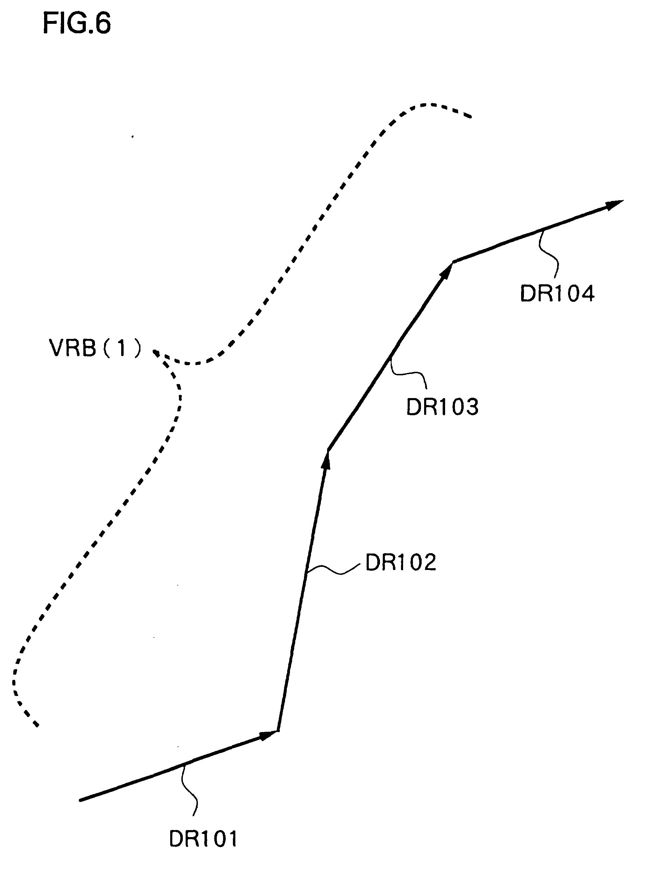

Fig. 6 is a diagram indicating the relation of VICS link number VRB(1) and road numbers of road data file F4 by use of an on-map road as recorded in the information storage section 37. Road numbers DR101, 102, 103, 104 are the road numbers of the road data file F4, which may correspond to a road on a map image to be visually indicated on the display 33. The VICS link number VRB(1) as transmitted from the road information station corresponds to a road of the road data file F4 as designated by these road numbers DR101, 102, 103, 104.

In this way thus described, the correspondence between a VICS link number VRB of each road as defined by the road information station and the road number(s) DR of each road constituting the road data file F4 recorded in the information storage section 37 is identifiable by the link data file F17. It is thus possible to promptly identify using this link data file F17 that the received VICS data is information concerning which one of roads of the road data file F4.

Additionally, as discussed supra, it is also possible to render VICS link numbers of VICS data completely coincident with the road numbers DR of road data file F4. When this is done, the link data file F17 is no longer required.

### Main Processing

Fig. 7 shows a flow chart of an overall processing to be executed by the CPU 2 of the navigation apparatus in accordance with the present invention. This processing gets started upon turn on of its electric power and is terminated when power is off. This turn on/off of power may be performed either by turning on and off the navigation apparatus' power supply per se or by turning on and off using an engine starter key (ignition switch) of a vehicle.

An initialize processing at step SA1 in Fig. 7 is as follows. First, a navigation program is read out of the information storage section 37. The read navigation program is then duplicated (installed) to flash memory 3. Thereafter, the program of flash memory 3 is executed. Further, the CPU 2 operates to clear the general-purpose data storage area of respective RAMs such as the work memory of RAM 5, image memory 10 and the like.

Duplication or "copying" of the program to flash memory 3 is executed when a new program 38b is set in the navigation apparatus by replacing one information storage section 37 with another. In short, copying of such program to flash memory 3 is done only when a new information storage section 37 is set in the navigation apparatus for the first time. Accordingly, when no exchange of information storage section 37 is found upon discrimination based on the disk management information 38a, the program copying to flash memory 3 is eliminated.

After the initialize processing is completed in this way, there will be executed cyclically a present position processing (step SA2), destination setter processing (step SA3), route search processing (step SA4), dynamic route search processing (step SA5), guidance/display processing (step SA6) and other processings (step SA7). Note here that duplicative or recurrent execution of the destination set processing (step SA3) and route search processing (step SA4) will be eliminated unless a destination change and vehicle's escape or "spin-off" from a present route occur.

At the present position processing (step SA2), the geographical coordinates (longitude, latitude and altitude) are detected of the self vehicle which is one of land movable objects with the navigation apparatus built therein. More specifically, the GPS receiver device 25 receives radiations from a plurality of satellites orbiting around the Earth. The radiation from each satellite is used to detect the coordinate position of each satellite, radiation emission time at each satellite, and radiowave reception time at GPS receiver device 25. The distance from each satellite may be obtained from these information items. Based on this distance from each satellite, the coordinate position of the self vehicle on the ground of Earth is detected. This resulting vehicle coordinate position is stored in RAM 5 as present position data MP. It will possibly happen in some cases that this present position data MP is modified depending upon information as input from the beacon receiver device 26 or data receiver device 27.

At the present position processing (step SA2) also, the absolute direction data ZD and relative azimuth angle data Dθ as well as travel distance data ML are obtained by utilizing the absolute direction sensor 21, relative direction sensor 22 and distance sensor 23. These absolute direction data ZD, relative azimuth angle data Dθ and travel distance data ML are used to perform an arithmetic processing for specifying a present vehicle position. The present vehicle position thus obtained by this processing is compared to map data stored in the data 38c of information storage section 37 for effectuation of appropriate corrections or amendments to ensure that the present position is accurately displayed on a map screen. This amendment processing may enable accurate acquisition of a present vehicle position even upon receipt of no GPS signals, such as when the vehicle is within tunnels.

At the destination setter processing (step SA3), the geographical coordinates of any operator's desired destination location may be set as registered destination data TP. One example is that the coordinates of a destination are designated by the operator by use of either road maps or house area maps as displayed on the display 33. Another example is that such destination is specified by the operator from an item-dependent list of destinations as displayed on display 33. When this destination setting operation is carried out by the operator, the information data of a destination designated, such as geographical coordinates thereof, is stored in RAM 5 as the registered destination data TP.

At the route search processing (step SA4), an optimal route covering from the guidance start-point data SP to final guidance point data ED is searched for. The term "optimal route" as used herein may refer to the following: for example, a route along which the vehicle is capable of reach the destination with either a minimal time or a minimal distance required for such travel; or alternatively, a route containing therein an increased number of wider roads when the operator prefers to give higher priority thereto for selection. Furthermore, in the case of using a highway, a route may also be preferable which enables the vehicle to arrive at its destination with a minimal time or a minimal travel distance by use of a highway selected.

Set at the guidance start-point data SP is either the same data as the present position data MP or node data on a road under guidance near the present position data MP. An "auto re-route" mode is also available which attempts, where a present vehicle position is out of the guidance route, to automatically again searches or "re-searches" for another optimal route leading from this out-of-route present position to the destination. Unless the auto-reroute mode is set, such route re-searching will never be performed. Also, when more than one stop-and-stay point is set, it will occur in certain cases that a route is searched by way of such point.

After the route search processing at step SA4, a dynamic route search processing (step SA5) is then executed. In this dynamic route search processing, a decision is made to determine whether a change of route is to be performed based on VICS data received. As described previously, the VICS data is received in cases where the "self" vehicle with the navigation apparatus built therein is passing through a location just beneath a transmitter device for transmitting VICS data, such as an antenna. In the case of using telephone networks, VICS data is received only at the time of communication via telephone links. The VICS data contains therein information of respective roads with traffic difficulties such as congestion, impassability or the like. Note that in the case of using FM multiplex radiowaves, such VICS data may be received constantly.

In summary, the VICS data VD received is used to detect whether traffic difficulties, such as congestion, restriction or the like, are present or not in the forward of a route under guidance. Upon detection of the presence of such traffic difficulties, whether a route change is to be done or not is judged depending upon whether a spare time is available for execution of a route change and a series of processing tasks associated therewith. Where a route change is done, a processing of displaying in parallel a before-the-change route and an after-the-change route is performed at a guidance/display processing of the next step SA6. These route change processings will be described later.

At the guidance/display processing (step SA6), the resulting guidance route as obtained by either the route search processing (step SA4) or route re-search processing is visually indicated on the display 33 with a present vehicle position being centrally placed thereon. Additionally, this guidance route displayed on display 33 is displayed in such a way as to provide visual identifiability on map images. For example, the guidance route may be characteristically displayed in a way such that it differs in color on the map displayed on display 33. Further, road guidance information is audibly produced from speaker 13 to assist the vehicle to satisfactorily travel along the route. As this operation is done, a variety of guidance information items are displayed on display 33 when necessary. Note that as image data for displaying guidance routes, either the road map data of nearby locations of a present vehicle position in the data 38c of information storage section 37 or the house area map near the present position may be used.

This change or switching between the road map data and house-area map data may be carried out by certain criteria which follow. For instance, the same is switched depending upon the distance from a present vehicle position to a guidance point (destination, stay-and-stop point, intersection, or the like), the vehicle speed, or the size of displayable area; or alternatively, the data switching may be responsive to the operator's manual operation of a switch. Further, near or around the guidance point (destination, stay-and-stop point, intersection, etc.), an image-magnified map covering an area near this guidance point is visually indicated on display 33. Note here that a simplified guidance route image other than the road map may alternatively be displayed on display 33. This simplified guidance route image is for example such that displaying of geographical information is eliminated and only the minimum necessary information items are displayed, such as directions of guidance route and of either a destination or stay-and-stop location, a present vehicle location, and the like.

After completion of the guidance/display processing of step SA6, a procedure labeled the "other processings" (step SA7) is executed. At the "other processings," a nearest facility processing can be performed on a case-by-case basis. This nearest facility processing refers to the process of searching for and designating one or more stay-and-stop points or locations (facilities or the like) other than the registered destination data TP. This data concerning such stay-and-stop points may be defined by use of maps being displayed on display 33 or respective information items. This nearest facility processing is done in a way similar to that of the destination setter processing of step SA3.

Also, at the "other processings" step, a decision is made to determine whether a present vehicle position is along the guidance route calculated. Specifically, upon detection of a deviation of the self vehicle from the guidance route, certain status flags are set for initiation of respective processings to enable a route re-search to get started. Also performed here is judging whether any change command of destination is input by the operator's switch operations.

After completion of the step SA7 processing, the routine beginning with the present position processing (step SA2) is repeated. Additionally, where the self vehicle has arrived at its destination also, the route guidance/display processing is terminated causing the system processing to return at step SA2 again. In this way, processing covering from step SA2 to step SA7 will be sequentially repeated.

### Dynamic Route Search Processing (Step SA5)

Fig. 8 is a diagram showing a flow chart of a dynamic route search processing as executed in this embodiment. At this dynamic route search processing, a decision is made to determine whether a route change is performed based on the received VICS data VD and the issuance time thereof in the way stated supra. When such route change processing was done, a specified processing is executed for simultaneously displaying the after-the-change route and its immediate prior "old" route on the display 33.

In Fig. 8, first performed is a decision for determining whether the self vehicle has arrived at the initially set destination (at step SB2). Optionally, the same may be done when the vehicle has reached a nearby location that is within a range far from the registered destination data TP by a specified distance. When the vehicle arrives at the destination or comes closer thereto, none of the series of processing of Fig. 8 will be carried out. This is because such route change becomes rather impreferable where the vehicle is near the destination. Adversely, a processing discussed below, such as a route change or the like, may be performed even where the vehicle comes closer to the destination. By way of example, there is a case where the final guidance point on the under-guidance road near or around the destination is present on a specific road that is blocked due to construction works. If this is the case, effectuation of such route change is recommendably performed; or alternatively, such traffic impassability may be informed.

In cases where it is determined at step SB2 that the self vehicle is still on the way to the destination, it is then determined whether a VICS signal (VICS data) is received. The VICS signal will never be received unless the vehicle passes through a location near one transmitter device for transmitting this signal in the form of either optical beacons or radiowave beacons or equivalents thereto. Alternatively, in the case of receiving VICS data via telephone networks, reception is unavailable unless communications with the VICS center get started via telephone links. Accordingly, no processings of Fig. 8 remain necessary upon receipt of no VICS signals, thus causing the processing flow to return to the main processing routine of Fig. 7.

On the other hand, upon receipt of the VICS signal, an issuance time point of road information contained in the VICS signal received is stored in RAM 5 as time stamp TSP1. Then, determine (at step SB6) whether the time point indicated by this time stamp TSP1 is after an instant elapsed by a predefined time duration or longer from the last end time point (calculation completion time TSP2) of a series of processings with regard to the prior received VICS data. In other words, where such series of processing accompanying with a route change (route re-search) based on the last received VICS data, a specific time point when these processings are completed has been stored in RAM 5 as the calculation completion time TSP2.

Then, it is determined whether the time stamp TSP1 of the presently received VICS data is a late time after elapse of a specific time that equals to the calculation end time TSP2 plus ten (10) minutes. This is for example due to the fact that after elapse of a relatively short time such as 10 minutes or therearound, the possibility remains relatively lower of road situation's suddenly varying at non-travel part of a presently guided route. Further, a route re-search may take much time. Thus, recurrently performing the time-consuming route re-search and its related processings within a short time period can disturb or prevent successful attainment of a smooth navigation processing. It can also happen that unnecessary re-search routines are repeated merely leading to the same route search result.

Accordingly, the series of processings of Fig. 8 are not designed when the time stamp TSP1 of the presently received VICS data is not past predefined time from the calculation end time TSP2. In other words, the processing flow is forced to get back to the main processing procedure of Fig. 7. Otherwise, when the time stamp TSP1 has been elapsed by such predefined time from the calculation end time TSP2, the processings following the step SB8, such as the route re-searching, get started. Note here that while in this embodiment the time difference between the time stamp TSP1 and calculation end time TSP2 is set at about ten minutes, such difference may be either greater or less than such value.

Further, in comparison of the time stamp TSP1 to calculation end time, the count value of a single pulse from a counter may be used for such comparison. For example, a route re-search based on VICS data may be performed in cases where a count operation is started at the calculation end time TSP2 and then the record time of time stamp TSP1 is at twenty (20) or greater in counter number by way of example. A situation-dependent, incremental or decremental value may be used as this count value, such as a travel distance, present position detection execution number, or the like. In other words, a re-search may be arranged to get started first by VICS data as received when the vehicle has moved a given distance or more from the calculation end time TSP2.

In Fig. 8, if the time point of the time stamp TSP1 is approximately ten minutes past the time point of calculation end time TSP2 (a judgment result at step SB6 is "YES"), then determine whether information guide associated with a searched guidance route is executed (at step SB8). In short, whether navigation is active or not is judged. If not during route guidance, the processing of Fig. 8 is eliminated or "passed" because of the unnecessity of performing any route change or the like based on VICS data. In short, the system routine is returned to the main processing of Fig. 7. If it is during route guidance, the processings subsequent to the step SB10 get started.

At step SB10, it is judged from the information contained in the presently received VICS data whether there is a road accompanying with traffic restriction information GK, such as complete traffic prohibition or the like in the forward of a route (route under guidance). If such restriction information GK indicating traffic incapability, such as traffic prohibition or the like, is found, then execute a route re-search processing for effectuation of a route change (step SB18).

However, if the restriction information GK, such as traffic prohibition or the like, is not found in the forward part of a present route, then execute its next step SB12. More specifically, an arrival time RT1 is estimated (at step SB12) which may be taken for the vehicle to travel from its present location to a road intersection in front of the route and whereat the vehicle is expected to change its travel direction, e.g. turning to the right or the left. This is done by accumulating, for respective roads constituting the guidance route, geographical distances of from a present vehicle location to such intersection by use of the road data file F4 and further by calculating an arrival time RT1 under an assumption that the vehicle travels the resultant distance at a certain speed. Note that the turn-to-right/left intersection may also include those branches other than intersections, which branches have more than two turnable directions permitting the vehicle to change its travel direction to any one of them.

In addition, the distance to the intersection for use in calculating this arrival time RT1 refers to a distance between a present vehicle location and a certain point that is a predefined distance before the center of a branch such as an intersection. This may be reworded in a way such that at a branch portion such as an intersection whereat the vehicle is expected to turn to the right or the left, warning or confirmation is made, when the vehicle is at a specified location that is in front of such intersection and is spaced apart therefrom by a predefined distance, to inform the vehicle operator of the presence of a right/left-turning intersection in the forward of the guidance route. Furthermore, where a road the vehicle is traveling consists of a plurality of lanes, it is a must for the vehicle operator to change the course in advance forcing his or her vehicle to run on the right or left side lane.

Accordingly, the location must be a specific point far from the branch center point by an enough distance required for completion of such information presentation and specified movement. For example, although it may be incremental or decremental depending on legal speeds of roads, in the case of ordinary roads, it may be about 400 meters before the intersection; for highways or wide roads with plural lanes, a point approximately 800-meter before the target may be preferable. Accordingly, the distance from such point which is a predefined distance before a branch portion to a present vehicle location is used for calculation of the arrival time RT1.

Also, the certain speed as used for calculation of the arrival time RT1 may be the self vehicle's average running speed which represents on average its history of speeds for the past predetermined period. In other words, since the vehicle's speed is being measured by the speed sensor 24, the average value of several speed measurements obtainable from speed sensor 24 is used for calculation of the aforesaid arrival time RT1. Alternatively, the same may be calculated based on a time taken for the vehicle to travel certain distance of a predetermined value as output from distance sensor 23; still alternatively, it may be fixed at one typical legal speed of ordinary roads.

Next, the received VICS data VD is used to calculate a calculation time CT as required for conducting a search for an adequate route that detours any roads suffering from traffic difficulties along the route (at step SB14). Additionally, this calculation time CT necessary for such route re-search becomes longer and shorter in proportion to the geographical distance covering from a present vehicle position to final guidance point. This calculation time CT may also be affected by processing speed of CPU 2 and significance of the number of to-be-searched roads under guidance; however, such remains predictable by means of statistical or empirical schemes. Then, a specific correlation is prestored in data 38c as a proportional table (correspondence table), which correlation is between a distance under route search from a present vehicle location to final guidance point and its necessary calculation time.

At step SB14, the calculation time CT is obtained from the distance of route search in this proportional table. This is modifiable in a way which follows. The relation of the route search distance and its necessary calculation time may be represented by a simple linear function based on statistic values or from the rules of experience. Then, an equation of proportion is prestored in either data 38c or ROM 4. The calculation time CT may be numerically defined by putting into this linear function the distance value of a route search concerned.

The calculation time CT may also contain therein, other than the guidance route search time, a time as taken to getting ready for initiation of information guidance using a newly searched/formed guidance route. In other words, this is a time as typically required, after formation of map images for use in displaying a re-searched route, to visualize this new guidance route on display 33 while simultaneously rendering available presentation of certain information based on such guidance route. Further, it may also be designed such that a route re-searching is permitted in cases where the calculation time CT is set at one fixed value while the arrival time RT1 taken for the vehicle to reach the intersection guidance start point is greater than or equal to this fixed value. Furthermore, count values generated by a counter may be used for measurement of the arrival time RT1 and calculation time CT; moreover, direct comparison using distance values may be permissible. By way of example, the route re-searching may be allowable if the vehicle's distance up to a certain point is greater than or equal to a predefined distance, the certain point including a point near the road with traffic difficulties, a change-the-travel-direction point immediately before such traffic-difficult road, or a point scheduled for the vehicle to turn to the right or left searched by route search.

It should be noted that during the route re-search based on VICS data VD, it is obvious that a route search is performed by use of roads except those roads with traffic difficulties as indicated by VICS data VD; however, the entire route covering from a present vehicle position to final guidance point may be subjected to re-searching. Further, the following processing may be performed. Specifically, only a detour route portion is re-searched which couples between respective branch points of each road with a traffic-difficult road laid therebetween, in the prior guidance route as searched by the route search processing (step SA4). This detour route and the original guidance route may be combined or "synthesized" together.

In summary, in the already searched guidance route, a detour route is searched which couples between a branch point BB1 on the side of a present vehicle location along the guidance route excluding any road segments with traffic difficulties and a first branch point BB2 that lies midway between one traffic-difficult road and a destination along the guidance route. This detour route may be replaced with such traffic-difficult road segment along the prior searched guidance route, providing a new guidance route.

Now, at step SB14, once the calculation time CT was numerically defined, it is then subjected to comparison with the arrival time RT1 to specify which one is greater than the other (at step SB16). If the arrival time RT1 is less than calculation time CT, then eliminate execution of any processings subsequent to step SB18, causing the procedure to get back to the main flow of Fig. 7. On the contrary, if arrival time RT1 is greater than calculation time CT then actually conduct a search for a guidance route that detours any road segments with traffic difficulties as indicated by VICS data (at step SB18).

More specifically, prior to the vehicle's arrival at the next intersection whereat it is expected to turn to the right or to the left, it was judged that a search for a detour route based on an updated version of VICS data received and also reconstruction of guidance route are possible, thus permitting actual execution of a detour-route search. Note here that this route re-search may be done in a way such that the entire route from a present vehicle position to a destination consists of "normal" roads other than those with traffic difficulties as described previously; or alternatively, only a route may be searched which shortly detours only traffic-difficult road segment(s). Further, a case-by-case selection scheme may be employed depending upon whether a present vehicle location is near the destination or not. For instance, where the vehicle approaches a specified point falling within a range of a predefined radius with the destination being as its center, the entire of such route up to the destination may be searched for; otherwise, only route segments detouring traffic-difficult roads may be searched.

At the processing of step SB12, where branch portions such as intersections whereat the vehicle is expected to turn to the right or the left are absent along the guidance route, a specific branch point such as an intersection immediately before a congested road segment will be regarded as the reference point. In short, a predicted time necessary for arrival at this branch point is treated as the arrival time RT1.

A time point when the route re-search is completed and further a new guidance route is in the state that enables visual indication thereof on the display 33 is stored in RAM 5 as the calculation end time TSP2 (at step SB20). Thereafter, the procedure is returned to the main processing of Fig. 7.

### Guidance/Display Processing

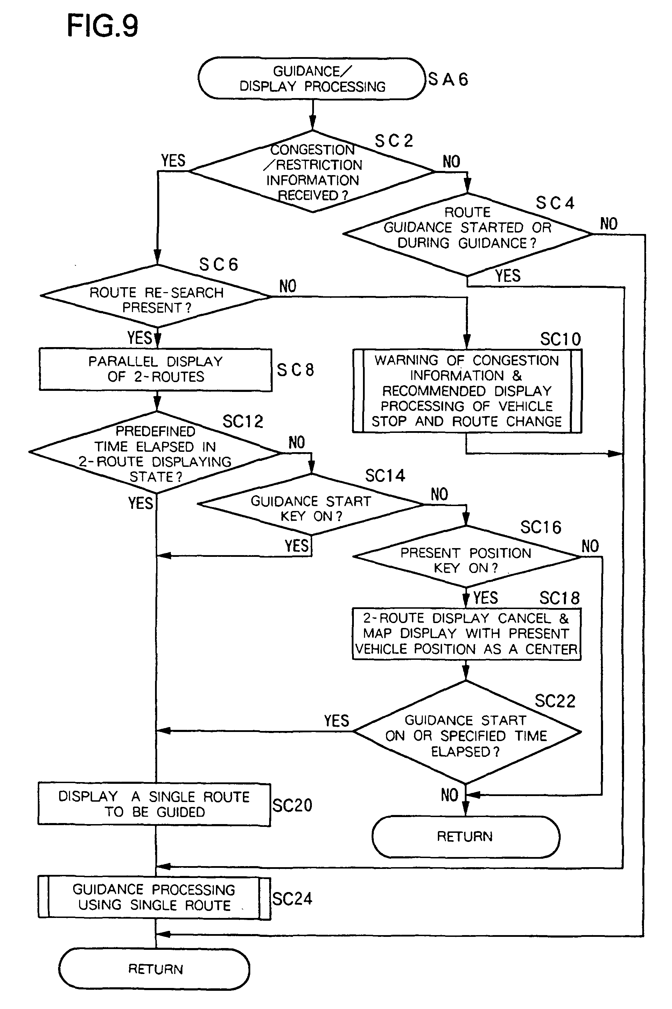

Fig. 9 shows a flow chart of the guidance/display processing (step SA6) in Fig. 7. With regard to this guidance/display processing, an explanation will be directed mainly to the state after the route re-search processing was performed based on VICS data VD. First, it is judged whether congestion or traffic restriction information is received (at step SC2). In other words, it is determined based on VICS data VD whether a road suffering from traffic difficulties is detected along the guidance route. Additionally, this judgment at step SC2 may alternatively be made by detecting presence or absence of VICS data VD. To make long story short, upon receipt of no VICS data VD, the next step SC4 is executed; a processing of step SC6 is done when VICS data VD is received.

Where there are no road segments with congestion or restriction information added thereto along the guidance route ("NO" at step SC2), it is determined what status the navigation apparatus is in--i.e. during route guidance, or before initiation of route guidance (at step SC4). If during route guidance, then a guidance processing cy a single route is performed (step SC24). In other words, some tasks including audible indication of travel directions, visual indication of map images on display 33, and the like are executed. Thereafter, the procedure is forced to return to the main flow of Fig. 7.

However, if not during such route guidance, the procedure is forced to immediately turn to the main flow of Fig. 7. In short, this may correspond to operation interruption states of the navigation apparatus.

Also, if it is judged that either congestion or restriction information is received ("YES" at step SC2), then it is determined whether a route re-search is executed (at step SC6). In other words, if it is determined that a dynamic route search processing is carried out based on an updated version ("YES" at step SC6), then on display 33 both a new route searched and the "old" guidance route at a time are visualized (step SC8). Thereafter, it is determined if a switch is pressed by the user for issuing an instruction of start of guidance.

More specifically, it is judged whether a 2-route (re-searched route and old one) displaying state of display 33 continues for a specified time duration (at step SC12). In other words, if no key operations are done by the user in the 2-route display mode ("YES" at step SC12), then a processing of step SC20 is performed forcing guidance to get started using a re-searched guidance route.

However, if a predefined time is not yet elapsed "NO" at step SC12), then judge whether a guidance starter key is pressed (at step SC14). In other words, it is determined whether the initiation of guidance is instructed during such 2-route displaying, by detecting presence or absence of an ON signal from the touch switch 34. If the guidance starter key is pressed ("YES" at step SC14), then a processing is executed causing only a new route thus re-searched to be visualized on display 33 (at step SC20).

On the contrary, if the guidance starter key is not hit, then it is determined whether a present position key is depressed (at step SC16). When the present position key is pressed, a map is displayed on display 33 with a present vehicle position being as its center (step SC18). However, the present position key is neither pressed ("NO" at step SC16), no further processings are done permitting retainment of the 2-route display mode, and then the procedure returns to the flow chart of Fig. 7.

If "YES" at step SC16 then a map on display 33 is visualized with a present vehicle location being centrally laid thereon; under such condition, it is determined whether the guidance starter key is activated, or alternatively, whether a predefined time has been elapsed (at step SC22). If such key operations is not done, the map image with a present vehicle position as its center continues being displayed. In other words, the processing gets back to the main flow of Fig. 7. On the contrary, upon activation of the guidance starter key or alternatively upon elapse of such predefined time ("YES" at step SC22), the guidance route searched is visualized on display 33 (at step SC20).

When the re-searched route is visualized on display 33 in response to depression of the guidance starter key (at step SC20), let information guidance get started based on such re-searched route (step SC24). Then, the processing is returned to the main flow of Fig. 7.

If the judgment results at steps SC2 and SC6 indicate that any dynamic route search processing was not performed even upon receipt of the congestion or restriction information, a warning message is displayed at step SC10. Specifically, while VICS data is received, judgment is such that the vehicle is near the along-the-route intersection whereat it is expected to change its running direction and that enough time is unavailable for execution of a route re-searching or the like; if this is the case, a caution indication is visualized on display 33 to inform the vehicle operator of the fact that no route re-search processing is performed.

For example, an indication is displayed informing the presence of a congested road in the forward part of a route; also displayed is an indication that suggests the vehicle to stop on a road side zone; further displayed is an indication suggesting activation of a route re-search key (at step SC10). One or more of these indications may be displayed in combination; or alternatively, none of them may be done when appropriate. After completion of the processing of step SC10, the guide is performed continuously using the prior guidance route (step SC24). Thereafter, the processing is returned to the main flow of Fig. 7.

It is to be noted that the terminology "guidance processing with a single route" as used for step SC24 refers to an information presentation processing for permitting the vehicle's travel along the guidance route. In short, a guidance route is searched at step SA4 of Fig. 7 or at step SB18 of Fig. 8. This searched guidance route is displayed on display 33. Yet, such guidance route being displayed is visualized in a way such that an image of the self vehicle is always centrally visualized on the screen. Also, certain information concerning one or several points along the guidance route whereat the vehicle is expected to change its travel direction may be issued when necessary. The processing of indicating or displaying a variety kinds of information items when necessary thus enabling the vehicle to travel successfully along the guidance route in the way described above is a processing of step SC24.

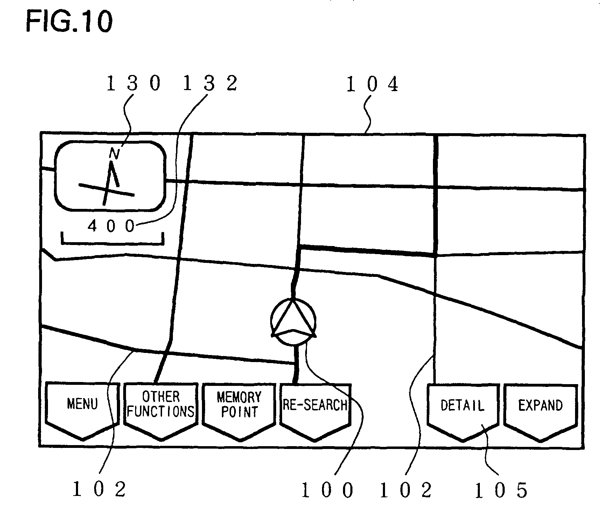

Fig. 10 is a diagram showing one exemplary image of the display 33 immediately prior to receipt of VICS data VD. In other words, a guidance route searched at the route search processing of Fig. 7 (step SA4) and a present vehicle position are being visualized on display 33. Reference numeral "100" designates the present location and travel direction of the self vehicle. Displayed on this screen 104 is only major trunk roads 102. Numeral 130 indicates the North of absolute direction. A value 132 of this symbol 130 denotes a map reduction scale as displayed on screen 104. The value 132 tells that the scale of reduction is 1/400 in Fig. 10. Some key guide patterns 105 are displayed at the lower part of screen, including "MENU," "OTHER FUNCTIONS," "MEMORY POINT," "RE-SEARCH," " "DETAIL," "EXPAND," etc.

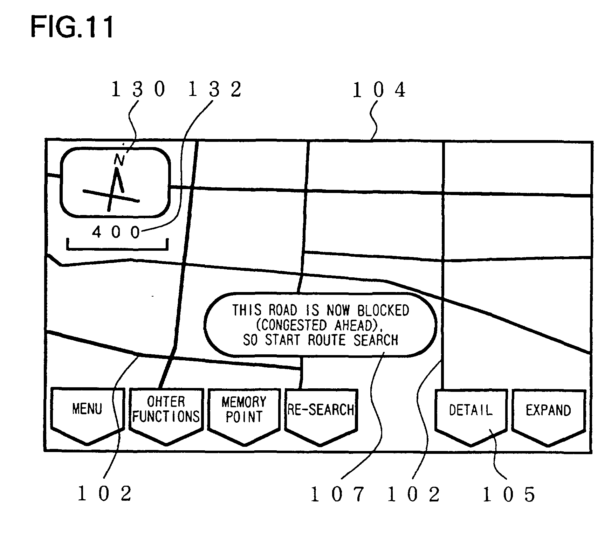

Fig. 11 shows a display image just before execution of a route re-search by the dynamic route search processing upon receipt of VICS data in the display state of display 33 shown in Fig. 10. In other words, Fig. 11 shows one typical image pattern as displayed when it is judged from the VICS data VD received during route guidance that a route re-search processing can be completed prior to arrival at the next branch point. A declaration message 107 is centrally displayed on the screen, which message informs initiation of a route re-search in the dynamic route search processing by saying "THIS ROAD IS NOW BLOCKED (CONGESTED AHEAD), SO START ROUTE SEARCH."

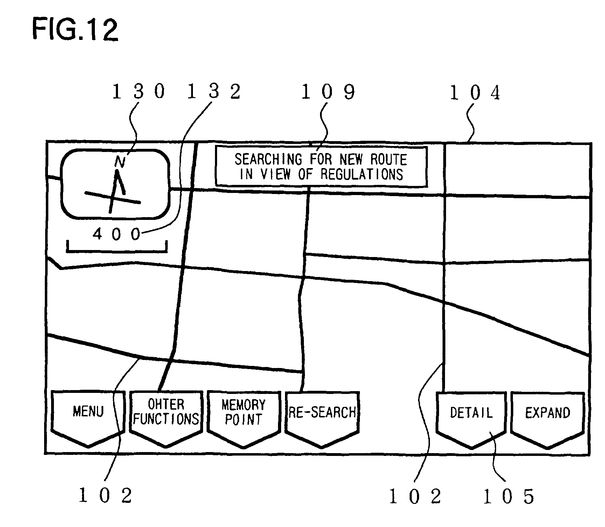

Fig. 12 shows another state of the display screen when a route re-search is actually effectuated at the dynamic route search processing stage. A wording 109 "SEARCHING FOR NEW ROUTE IN VIEW OF REGULATIONS" is displayed at the upper part of the screen. Note that a route to be searched may be either an entire route covering from a present vehicle location to its destination or a partial route relating to a route segment detouring a road with traffic difficulties.

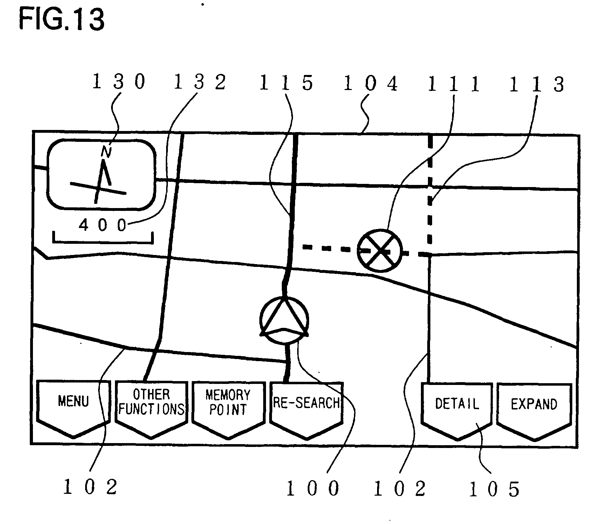

Fig. 13 shows one subsequent display state in which two routes are displayed in a parallel fashion on the display 33 after completion of the route re-searching. In short, this may correspond to the step SC8 of Fig. 9. Displayed at the upper part of the screen are an old guidance route 113 and a symbol 111 indicative of one unable-to-pass portion along the route. Further, a new route 115 is displayed simultaneously. Under this condition, when the guidance starter key is hit, the old guidance route 113 and symbol 111 are then erased. Additionally, while in Fig. 13 the old guidance route 113 is indicated by a broken line, color-different displaying schemes may be employed providing visual recognizability between old guidance route 113 and new route 115.

As has been described in detail, the dynamic route search processing in accordance with the present invention is featured in that it employs a situation-dependent scheme for permitting selective execution of a route re-search based on VICS data received, depending upon whether an enough time required for performing a series of associative processing completion is available or not. More specifically, even where VICS data is presently received, if the self vehicle has come closer to an intended target branch point and there is no extra time for permitting a route change by a route re-search or the like, then ignore the VICS data received at that time point.

The present invention should not exclusively be limited to the illustrative embodiment and may be modified without departing from the concept of the invention. For example, selection of each command as input by turn-on of the touch switch 34 or using a mouse cursor may alternatively be executed by voice from the operator. If this is the case, the input/output device 30 is provided with an audio input device such as a microphone while causing the audio processor 11 to perform audio analysis.

Also, in the case of receiving VICS data by utilizing FM radiowaves, since traffic information with respect to an increased number of roads in wide areas, it may be arranged so that this VICS data is taken into account with respect to the search cost of each road at the time of route search (step SA4) of Fig. 7. In other words, the search cost of each road may increase or decrease with a change in degree of congestion GD. By way of example, if the congestion degree GD is significant, that is, when the road of interest is full of vehicles, the search cost is so defined as to render such road difficult to be selected as a guidance route. Whereby, a certain route is searched as the guidance route while maximally excluding those roads high in congestion degree GD.

Further, although explained earlier in the embodiment, the road data file F4 may be configured rendering the VICS link numbers VRB identical to the road numbers DR of road data file F4. Whereby, the link data file F17 is no longer required.

In addition, in the above embodiment, while the touch switch 34 was used for necessary key operations, this may alternatively be achieved by use of a plurality of physical push switches as provided just below the display 33. In this case, function explanations of respective push switches will be displayed as icons at lower part of the display screen.

Furthermore, in the 2-route parallel display of Fig. 13, certain route segments under modification may be visualized to occupy the entire region thereof. In other words, the map's reduction scale may be suitably adjusted so that a route segment as searched as a detour route is completely contained within the display screen.

In addition to the above, while in the embodiment whether a route re-search based on VICS data is performed is judged depending upon a time taken for the vehicle to arrive at the next branch point along the route under guidance, this may be carried out in a way which follows. Assume that congestion or the like is detected in the forward part of a straight-going route under guidance, and that there are no points scheduled for the vehicle to change its travel direction between a present vehicle location and such congested road segment. If this is the case, a detour route is to be searched. However, where the vehicle is at a location that is less in distance to a right/left-turning point as newly set by this detour route, such re-searched detour route is cancelled or withdrawn from consideration, while causing the guidance using its immediate prior guidance route to continue thereafter. This may be reworded in a manner such that where the vehicle has already come closer to a course-change (right/left-turning) point whereat the vehicle is scheduled to change its travel direction to enter a newly searched detour route and therefore successful turning to the right or left is no longer expectable, then interrupt or disenable such guidance using the new detour path. Note in this case that an indication (step SC10 of Fig. 9) may be provided to inform the presence of a congested road in the forward direction of guidance route.

Still further, the start-up parameter of the route re-search processing based on VICS data may be modified in a way which follows. Assume that the guidance route is a straight path. Assume also that a congested part is detected by VICS data in the forward direction during straight-going guidance route traveling. In this case, use as a reference point one branch point (such as an intersection or the like) which lies between a present vehicle location and such congested part and also is nearest to the latter. In other words, compare between an arrival time taken for the vehicle to move from its present location up to such specified branch point nearest to the congested part and a time required for completion of a route re-search and the like. In short, whether a route re-search is done is judged depending upon whether any extra time is available while the vehicle arrives at a branch point which will possibly be changed in travel direction due to the route re-search execution.

Yet further, a route search may be performed by use of road information as received from the road information station such as VICS at the instant when a guidance route search gets started upon initiation of destination setting or the like. In other words, during a route search covering from a start location to a destination at the navigation start time point, weighting of search cost may be performed by use of the received road information. Whereby, the risk of unintentionally selecting roads with traffic difficulties as part of a guidance route may be eliminated prior to departure.

Note also that while the embodiment is arranged so that the route search is executed using all the VICS data received, this may be modified in a way as follows. It can happen that the area is limited which contains therein those roads usable as part of the recommendable route. By way of example, a route search is carried out by using only a respective one of certain roads included within nearby areas of a start location and a destination as well as an area covering up to a region far by a specified distance from a straight line extending from the start location to the destination. Hence, with regard to the received VICS data also, any information as to those roads included in areas other than those to be subject to a route search may be either cancelled or out of use.

For instance, assume that the VICS data received provides information about respective roads as shown in Fig. 6. In this case, if the road number DR104 corresponds to a road within out-of-search areas, any information concerning this road number DR104 is then cancelled or applied with an out-of-use processing. Whereby, cut-and-try selectivity is available also for the road information of the received VICS data or the like, which in turn leads to capability of reducing a route-search time.

The present invention should not exclusively be limited to the illustrative embodiment and may be changed without departing from the concept of the invention. For example, the recording medium for storage of various kinds of data items shown in Fig. 2 may be replaced with other writable recording media, such as floppy diskettes. Further, the navigation apparatus may be designed to comprise an audio input device with an analog/digital converter. This audio input device may be configured to execute respective operations in responding to audio/voice commands as input through this audio input device.

Furthermore, in the navigation apparatus in accordance with the present invention, all or several processings of the flow chart discussed supra may be executed at the information management center(s) such as VICS, ATIS, and the like. This processing result (processed information) is received by the data transmit/receive device 27. For example, the destination set processing (step SA3) and route search processing (step SA4) of Fig. 5 may be executed on the side of the information processing center with map information accumulated therein. Guidance route data searched is then transferred via the data transmit/receive device 27 to the navigation apparatus of this invention.

In the navigation apparatus of the present invention, a guidance display processing is executed based on guidance route data transmitted thereto. In other words, certain information about the retrieval criteria of a destination or more than one stop-and-stay facility and also route search criteria may be sent from the navigation apparatus of this invention toward the information management center. The information management center is responsive to receipt of such criteria sent thereto, for performing both a search for a desired facility and a route leading to the destination. Then, the information as to the retrieval/extraction/search result is transmitted from the information management center to the navigation apparatus along with map information associated therewith.

At the navigation apparatus, the searched facility is visually indicated on display 33 based on this retrieval/extraction/search result as received. With such an arrangement, it becomes possible to retrieve, extract and search for each facility based on detailed and updated information of respective facilities regarding a nearby area of a present vehicle location. It is also possible during facility searching to conduct a search in view of any possible environmental changes (new establishment of one-way roads) of outskirts of roads. Note that in this case, it is required that the information about respective facilities as accumulated in the information management center is regularly updated.

Furthermore, the information storage section 37 which stores therein respective programs of this invention discussed previously and information such as maps and display symbols as well as equivalents thereto may be so designed as to enable commercially available computer equipment to make use of the same. In other words, the programs stored in the information storage section 37 are those programs capable of being executed by ordinary computers. If this information storage section 37 is connected to a handheld mobile computer device along with a device capable of detecting a present vehicle location in cooperation with the GPS receiver device 25, it becomes possible for this computer to accomplish intended navigation processings. Furthermore, the present invention may also be applicable as navigation apparatus for use with land vehicles other than motorcars, ships, aircrafts, helicopters and others, and the maps used for navigation may alternatively be nautical charts or submarine/sea-bed maps. Still further, the present invention may be applied to handheld or portable navigation apparatus in addition to the navigation apparatus as built in movable objects such as motorcars or the like. Specifically, this invention is applicable also to small-size navigation apparatus hand-carriable by people, such as those for use in cycling, traveling, mountain-climbing, hiking, fishing, etc.

It should be noted that in addition to the foregoing embodiment, the present invention may comprise other characteristics which follow.
(1) Conduct a search for a guidance route, detect a present vehicle position, judge from the guidance route whether the present location, which has been out of the guidance route, is at a location returning to the guidance route, and disable the guidance route re-search in response to this judgment result.
(2) Detect a present location, generate a plurality of candidates with the possibility that this detected present location corresponds to a point on map information, select from among these plural generated present-location candidates a specific one with maximal possibility as the present location, determine whether it is necessary to switch between candidates as selected during this selection, and temporarily preventing conduction of a guidance route search for a predefined time period in conformity with this judgment result.
(3) Comprising present position detection means for detecting a geographical present position of a moving or movable object, matching point detection means for detecting in accordance with certain matching criteria or conditions whether either one of facility and facility-associated road is present which matches the present position of the movable object, and route search means for preventing a re-search of route upon detection of such matched facility or facility-associated road at said matching point detection means.
(4) Comprising detection means for detecting a geographical present location of a movable object, travel path storage means for detecting a road that matches the present location of the movable object in accordance with certain matching criteria and for storing therein information concerning this road, and permission means for permitting execution of a guidance route re-search only when the road matching the present location of the object is identical for more than one time with a road corresponding to the travel path as stored in said travel path storage means.
(5) Comprising detection means for detecting a geographical present location of a movable object, matching point detection means for detecting in accordance with certain matching criteria whether either one of facility and facility-associated road is present which matches the present position of the movable object, travel path storage means for detecting a road matching the present location of the movable object in accordance with certain matching criteria and for storing therein information concerning the road, and permission means for eliminating conduction of a route re-search upon detection of any matching facility or facility-associated road at said matching point detection means and for permitting execution of a re-search for a guidance route only when the road matching the present location of the movable object becomes identical for more than one time to a road corresponding to the travel path as stored in said travel path storage means.
(6) In the paragraphs (3), (4) or (5), a feature also lies in that the certain matching criteria are such that a correlation value of the movable body's present location detected and a point on each road are calculated, and that a point with this maximized correlation value is regarded as the matching road and/or a facility having a facility geographical range including the detected movable object's present location.
(7) In addition to the feature of (6), it is featured in that a past average vehicle speed or straight-going continuation time is added to the certain matching criteria.
(8) In addition to the embodiment, the present invention may be a medium which stores therein a computer program for navigation processing, featured in that the program includes the steps of detecting a geographical present location of a movable body, detecting in accordance with certain matching criteria whether a facility or facility-associated road is present that matches the movable body's present location, and preventing conduction of a route re-search when a matched facility or facility-associated road exists.
(9) In addition to the embodiment, the present invention may be a medium storing therein a computer program for navigation processing, featured in that the program includes the steps of detecting a geographical present location of a movable body, detecting in deference to certain matching criteria a road which matches the movable body's present location, storing information about the road as a travel path, and allowing a re-search for a guidance route only when the road that matches the movable body's present location is identical for more than one time to a road corresponding to the travel path.
(10) In addition to the embodiment, the present invention may be a medium storing therein a computer program for navigation processing, featured in that the program includes the steps of detecting a geographical present location of a movable body, detecting in accordance with certain matching criteria whether a facility or facility-associated road is present which matches the movable body's present location, preventing execution of a route re-search when a matched facility or facility-associated road exists, simultaneously detecting in deference to certain matching criteria a road that matches the movable object's present location, storing information concerning the road as a travel path, and permitting execution of a guidance route re-search only when the road matching the movable body's present location coincides for more than one time with a road corresponding to the travel path.
(11) In addition to the embodiment, with regard to the feature (8), (9) or (10), the present invention may be a medium storing therein a computer program for navigation processing, featured in that the certain matching criteria are such that a correlation value of the movable body's present location detected and a point on each road are calculated, and that a point with this maximized correlation value is regarded as the matching road and/or a facility having a facility geographical range including the detected movable object's present location.
(12) In addition to the embodiment, the present invention may be a medium storing therein a computer program for navigation processing, featured in that, in the feature (11), a past average vehicle speed or straight-going continuation time is added to the certain matching criteria.

As has been described in detail previously, the present invention is arranged to selectively designate whether a detour path is searched for or not upon detection of a road with traffic difficulties based on VICS data as received during traveling along once-set guidance route leading to a destination location. More specifically, a route change processing is to be executed only when some extra time is available for completion of a series of processings associated with the route re-search until the vehicle arrives at a course-change preparation start point along the route under guidance. Accordingly, it becomes possible to eliminate occurrence of any sudden change in travel direction as originated from a route change. This makes it possible to prevent complication or misleading of information otherwise occurring due to a rapid or sudden change of travel direction.

As described above, the present invention is to prevent execution of a detour route search by the received VICS data where certain conditions are not met. To this end, a necessary time RT1 as taken for a land vehicle to move from its present location to arrive at a first forward point is calculated whereat the vehicle is expected to turn to the right or left along a route under guidance (step SB12). On the other hand, a time CT required to conduct a route re-search based on VICS data is calculated (step SB14). By comparing the necessary time RT1 with the time CT to determine which one is greater than the other (step SB16), if TR1 ≥ CT then a route re-search based on VICS data is performed (step SB18). However, if RT1 < CT then execution of the route re-search is eliminated.

## Claims

1. A route search apparatus comprising:
means (**step SA4**) for searching for a guidance route;
means for receiving information as to a route inadequate for travel; and
means **(step SB4)** for determining whether an inadequate route is contained in the guidance route to provide a determination result;
**characterized by**
means **(SB12, SB14, SB16)** responsive to receipt of the result for preventing execution of a re-search for the guidance route if a necessary time or distance up to the inadequate route is less than either a predetermined time or a predefined distance.

2. The route search apparatus according to claim 1, **characterized in that** when the route inadequate for travel is impassable, the re-search for the guidance route is executed even when the necessary time or distance up to the inadequate route is less than a predetermined time or predefined distance.

3. A navigation apparatus comprising:
present position detection means **(21, 22, 23, 25)** for detecting a present position of a movable object;
road traffic information reception means **(26, 27)** for receiving road traffic information; and
route search means for searching for a route leading to a destination location;
**characterized by**
necessary time calculation means **(step SB14)** for calculating a time duration required for a route search (step SA5) performed in accordance with the road traffic information received by said road traffic information reception means and for initiation of guidance using the route thus searched;
time calculation means (**step SB12**) for calculating a predicted time taken for the movable object to arrive at a certain location before a branch section in the forward direction; and
said route search means including comparison means **(step SB16)** for comparing said necessary time to said predicted time, and judgment means **(step SB16)** responsive to said comparison means for judging whether a route is to be searched.

4. A navigation apparatus comprising:
present position detection means **(21, 22, 23, 25)** for detecting a present position of a moving or movable body;
road traffic information reception means **(26, 27)** for receiving road traffic information; and
route search means **(step SA5**) for searching for a route leading to a destination location;
**characterized by**
necessary time calculation means **(step SB14**) for calculating a time duration as required for a route search being performed in response to receipt of the road traffic information as received by said road traffic information reception means and until availability of starting guidance using the route;
predictive time calculation means **(step SB12**) for calculating a predicted time required for the movable body to reach a travel direction-change location in the forward direction at which the body is expected to turn to the route that was route-searched in accordance with said received road traffic information; and
said route search means including comparison means **(step SB16)** for comparing between said necessary time and said predicted time, and judgment means **(step SB16)** responsive to said comparison means for judging whether a route search is to be conducted.

5. The navigation apparatus according to claim 3 or 4, **characterized in that** the route search means performs a route search based on said road traffic information in cases where restricted road information is contained in the road traffic information as received by said road traffic information reception means.

6. The navigation apparatus according to claim 3 or 4, **characterized in that** said certain branch-preceding location and travel direction-change location are an information guidance start point or course change start point as to the branch and travel direction.

## Patentansprüche

1. Routensuchvorrichtung mit
einer Einrichtung **(Schritt SA4**) zum Suchen einer Führungsroute,
einer Einrichtung zum Empfang von Informationen bezüglich einer Route, die für die Fahrt nicht geeignet ist, und
einer Einrichtung **(Schritt SB4)** zur Bestimmung, ob eine nicht geeignete Route in der Führungsroute enthalten ist, um ein Bestimmungsergebnis bereitzustellen,
**gekennzeichnet durch**
eine Einrichtung **(SB12, SB14, SB16**), die auf den Empfang des Ergebnisses anspricht, um die Ausführung einer erneuten Suche nach der Führungsroute zu verhindern, falls eine erforderliche Zeit oder ein erforderlicher Abstand bis zu der nicht geeigneten Route geringer als eine vorbestimmte Zeit oder ein vordefinierter Abstand ist.

2. Routensuchvorrichtung nach Anspruch 1, **dadurch gekennzeichnet, dass**, wenn die für die Fahrt nicht geeignete Route unpassierbar ist, die erneute Suche nach der Führungsroute ausgeführt wird, selbst wenn die notwendige Zeit oder der notwendige Abstand bis zu der nicht geeigneten Route geringer als eine vorbestimmte Zeit oder ein vordefinierter Abstand ist.

3. Navigationsvorrichtung mit
einer Ist-Positionserfassungseinrichtung **(21, 22, 23, 25)** zur Erfassung einer gegenwärtigen Position eines beweglichen Objekts,
einer Straßenverkehrsinformations-Empfangseinrichtung **(26, 27)** zum Empfang von Straßenverkehrsinformationen, und
einer Routensucheinrichtung zum Suchen nach einer Route, die zu einem Zielort führt,
**gekennzeichnet durch**
eine Einrichtung zur Berechnung einer notwendigen Zeit **(Schritt SB14)** zur Berechnung einer Zeitdauer, die für eine Routensuche **(Schritt SA5)** erforderlich ist, die entsprechend den **durch** die Straßenverkehrsinformations-Empfangseinrichtung empfangenen Straßenverkehrsinformationen durchgeführt wird, und zur Initiierung einer Führung unter Verwendung der auf diese Weise gesuchten Route,
eine Einrichtung zur Berechnung einer vorhergesagten Zeit **(Schritt SB12)** zur Berechnung einer vorhergesagten Zeit, die für das bewegliche Objekt zum Erreichen einer bestimmten Stelle vor einem Verzweigungsabschnitt in Vorwärtsrichtung benötigt wird, und
wobei die Routensucheinrichtung eine Vergleichseinrichtung **(Schritt SB16)** zum Vergleich der notwendigen Zeit mit der vorhergesagten Zeit sowie eine Beurteilungseinrichtung **(Schritt SB16)** aufweist, die auf die Vergleichseinrichtung anspricht, um zu beurteilen, ob eine Route zu suchen ist.

4. Navigationsvorrichtung mit
einer Ist-Positionserfassungseinrichtung **(21, 22, 23, 25)** zur Erfassung einer gegenwärtigen Position eines sich bewegenden oder beweglichen Körpers,
einer Straßenverkehrsinformations-Empfangseinrichtung **(26, 27)** zum Empfang von Straßenverkehrsinformationen und
einer Routensucheinrichtung **(Schritt SA5)** zum Suchen nach einer Route, die zu einem Zielort führt,
**gekennzeichnet durch**
eine Einrichtung zur Berechnung einer notwendigen Zeit (**SB14**) zur Berechnung einer Zeitdauer, wie sie für eine Routensuche erforderlich ist, die im Ansprechen auf den Empfang der von der Straßenverkehrsinformations-Empfangseinrichtung empfangenen Straßenverkehrsinformationen durchgeführt wird, und bis zur Verfügbarkeit des Startens der Führung unter Verwendung der Route,
einer Einrichtung zur Berechnung einer vorhergesagten Zeit **(SB12)** zur Berechnung einer vorhergesagten Zeit, die für den beweglichen Körper zu Erreichen eines Fahrtrichtungsänderungsorts in Vorwärtsrichtung erforderlich ist, zu dem erwartet wird, dass der Körper zu der Route wechselt, deren Route entsprechend den empfangenen Straßenverkehrsinformationen gesucht worden ist, und
wobei die Routensucheinrichtung eine Vergleichseinrichtung **(Schritt SB16)** zum Vergleich der notwendigen Zeit und der vorhergesagten Zeit sowie eine Beurteilungseinrichtung **(Schritt SB16)** aufweist, die auf die Vergleichseinrichtung anspricht, um zu beurteilen, ob eine Routensuche durchzuführen ist.

5. Navigationsvorrichtung nach Anspruch 3 oder 4, **dadurch gekennzeichnet, dass** die Routensucheinrichtung eine Routensuche auf der Grundlage der Straßenverkehrsinformationen in Fällen ausführt, in denen Informationen bezüglich einer Beschränkungen aufweisenden Straße in den durch die Straßenverkehrsinformations-Empfangseinrichtung empfangenen Straßenverkehrsinformationen enthalten ist.

6. Navigationsvorrichtung nach Anspruch 3 oder 4, **dadurch gekennzeichnet, dass** der bestimmte vorausgehende Verzweigungsort und der Fahrtrichtungsänderungsort ein Informationsführungsstartpunkt oder ein Kursänderungsstartpunkt in Bezug auf die Verzweigung und die Fahrtrichtung sind.

## Revendications

1. Dispositif de recherche d'itinéraire comprenant :
des moyens de recherche (étape SA4) d'un itinéraire de guidage ;
des moyens de réception d'informations concernant un itinéraire inapproprié pour le voyage ; et
des moyens (étape SB4) destinés à déterminer si un itinéraire inapproprié est contenu dans l'itinéraire de guidage pour fournir un résultat de détermination ;
**caractérisé par**
des moyens (SB 12, SB 14, SB 16) sensibles à la réception du résultat pour empêcher l'exécution d'une recherche supplémentaire de l'itinéraire de guidage si un temps nécessaire ou une distance allant jusqu'à l'itinéraire inapproprié est inférieur soit à un temps prédéterminé, soit à une distance prédéfinie.

2. Dispositif de recherche d'itinéraire selon la revendication 1, **caractérisé en ce que** lorsque l'itinéraire inapproprié pour le voyage est impraticable, la recherche supplémentaire de l'itinéraire de guidage est exécutée même si le temps nécessaire ou la distance allant jusqu'à l'itinéraire inapproprié est inférieur à un temps prédéterminé ou à une distance prédéfinie.

3. Dispositif de navigation comprenant :
des moyens de détection de la position présente (21, 22, 23, 25) pour détecter une position présente d'un objet mobile ;
des moyens de réception des informations relatives au trafic routier (26, 27) pour recevoir des informations relatives au trafic routier ; et
des moyens de recherche d'itinéraire pour rechercher un itinéraire allant jusqu'à un lieu de destination ;
**caractérisé par**
des moyens de calcul du temps nécessaire (étape SB14) pour calculer une durée de temps requise pour une recherche d'itinéraire (étape SA5) exécutée conformément aux informations relatives au trafic routier reçues par lesdits moyens de réception des informations relatives au trafic routier et pour le déclenchement du guidage en utilisant l'itinéraire ainsi recherché ;
des moyens de calcul du temps prédictif (étape SB 12) pour calculer un temps prédit pris pour l'objet mobile pour arriver à un certain emplacement avant une section d'embranchement dans la direction avant ; et
lesdits moyens de recherche d'itinéraire comprenant des moyens de comparaison (étape SB16) pour comparer ledit temps nécessaire par rapport au dit temps prédit, et des moyens d'évaluation (étape SB16) sensibles auxdits moyens de comparaison pour évaluer si un itinéraire doit être recherché.

4. Dispositif de navigation comprenant :
des moyens de détection de la position présente (21, 22, 23, 25) pour détecter une position présente d'un corps en mouvement ou mobile ;
des moyens de réception des informations relatives au trafic routier (26, 27) pour recevoir des informations relatives au trafic routier ; et
des moyens de recherche d'itinéraire (étape SAS) pour rechercher un itinéraire allant jusqu'à un lieu de destination ;
**caractérisé par**
des moyens de calcul du temps nécessaire (étape SB14) pour calculer une durée de temps comme requise pour une recherche d'itinéraire en cours d'exécution en réponse à la réception des informations relatives au trafic routier comme reçues par lesdits moyens de réception des informations relatives au trafic routier et jusqu'à la disponibilité du guidage de départ utilisant l'itinéraire ;
des moyens de calcul du temps prédictif (étape SB 12) pour calculer un temps prédit requis pour le corps mobile afin d'atteindre un emplacement de changement de direction de voyage dans la direction avant au niveau duquel le corps doit tourner pour l'itinéraire qui a été recherché conformément auxdites informations relatives au trafic routier ; et
lesdits moyens de recherche d'itinéraire comprenant des moyens de comparaison (étape SB 16) pour comparer entre ledit temps nécessaire et ledit temps prédit, et des moyens d'évaluation (étape SB 16) sensibles auxdits moyens de comparaison pour évaluer si une recherche d'itinéraire doit être menée à bien.

5. Dispositif de navigation selon la revendication 3 ou 4, **caractérisé en ce que** les moyens de recherche d'itinéraire exécutent une recherche d'itinéraire en se basant sur lesdites informations relatives au trafic routier au cas où des informations routières restreintes seraient contenues dans les informations relatives au trafic routier comme reçues par lesdits moyens de réception des informations relatives au trafic routier.

6. Dispositif de navigation selon la revendication 3 ou 4, **caractérisé en ce que** ledit certain emplacement précédant l'embranchement et ledit emplacement de changement de direction de voyage sont un point de départ de guidage des informations ou un point de départ de changement de trajet quant à la direction de l'embranchement et du voyage.
